(19) Europäisches Patentamt
European Patent Office
Office européen des brevets

(11) EP 4 242 195 A1

(12) EUROPEAN PATENT APPLICATION

(43) Date of publication:
**13.09.2023 Bulletin 2023/37**

(21) Application number: **22161222.9**

(22) Date of filing: **09.03.2022**

(51) International Patent Classification (IPC):
***C05G 3/90*** *(2020.01)*

(52) Cooperative Patent Classification (CPC):
**C05G 3/90**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **EuroChem Antwerpen**
**2040 Antwerpen (BE)**

(72) Inventors:
- **Peters, Nils**
  **Mannheim (DE)**
- **Beeckman, Fabian**
  **Gent (BE)**
- **Motte, Hans**
  **Gent (BE)**
- **Drozdzecki, Andrzej**
  **Gent (BE)**
- **Audenaert, Dominique**
  **Gent (BE)**
- **Beeckman, Tom**
  **Gent (BE)**

(74) Representative: **Willnegger, Eva**
**Montgomery IP**
**Boulevard Saint Michel 10/4**
**1150 Bruxelles (BE)**

(54) USE OF PYRAZOLO[3,4-B]PYRIDINE COMPOUNDS AS NITRIFICATION INHIBITOR

(57) The use of pyrazolo[3,4-b]pyridine compounds as nitrification inhibitor.



Processed by Luminess, 75001 PARIS (FR)

## Description

The present invention relates to the use of a pyrazolo[3,4-b]pyridine compounds as nitrification inhibitor or as nitrogen stabilizer, to fertilizer mixtures containing it, a process for its preparation, and the method of fertilizing soil including its application.

In order to provide plants in agriculture or horticulture with the nitrogen they need, fertilizers comprising ammonium compounds are frequently used.

Ammonium compounds are converted microbially to nitrate (nitrification) in the soil within a relatively short time. Nitrate, however, can be leached from the soil. The leached fraction is no longer available for plant nutrition, and so for this reason rapid nitrification is undesirable. In order to exploit the fertilizer more effectively, therefore, nitrification inhibitors are added to it. One known group of nitrification inhibitors are pyrazole compounds.

One problem attending the use of pyrazole compounds as nitrification inhibitors is their high volatility. When fertilizer preparations containing pyrazole compounds are stored, therefore, there is a continuous loss of active ingredient as a result of evaporation. For this reason the pyrazole compounds must be formulated in a nonvolatile form by means of appropriate measures.

EP-B-1 120 388 describes phosphoric acid addition salts of 3,4-dimethylpyrazole and 4-chloro-3-methylpyrazole for use as nitrification inhibitors. Through the salt form it is possible for the volatility to be significantly reduced.

WO 96/24566 relates to the use of low-volatility pyrazole derivatives having hydrophilic groups as nitrification inhibitors. As an example, 2-(N-3-methylpyrazole)succinic acid (DMPSA) is proposed as a nitrification inhibitor. Suitable mineral fertilizers cited are ammonium-containing nitrates, sulfates or phosphates.

WO 2011/032904 and WO 2013/121384 describe pyrazole derivatives as nitrification inhibitors, one of which is DMPSA.

US 2018/0016199 A1 describes pyrazole compounds as nitrification inhibitors. The examples refer to compounds of a formula I in which R3 and R4 can form a carbocyclic residue. The definition in claim 1 also allows for R3 and R4 to form a heterocyclic ring, however, no specific structure examples are provided for this very broad definition. The compounds contain a C3-6 alkynyl group linked with one pyrazole nitrogen atom.

US 2020/0062755 A1 discloses pesticidally active heterocyclic derivatives with sulfur containing substituents containing an N=S structural element. Specific compounds contain a pyrazolo pyridine group wherein the pyridine nitrogen is distant from the pyrazolo nitrogen, see paragraphs [0151] and [0165] and Table Q.

WO 2010/100475 A1 discloses hydroxamic acid derivatives as gram-negative antibacterial agents. Example 145 B and Example 293 B show compounds containing a pyrazolo[3,4-b]pyridine-4-carboxamide group in which the nitrogen of the carboxamide bears a hydrogen atom and a hydroxyl group.

PCT/EP2021/075026 to the applicant discloses the use of certain pyrazolo[3,4-b]pyridine-4-carboxamides as nitrification inhibitors.

The known nitrification inhibitors act upon the nitrifying ammonia-oxidizing bacteria (AOB). However, also ammonia-oxidizing archaea (AOA) promote the nitrification of ammonia. One of these is the ammonia-oxidizing archaeon Nitrososphaera viennensis.

J. Zhao et al. in Soil Biology and Biochemistry 141 (2020) 107673 describe the use of simvastatin as a specific AOA inhibitor in pure culture and in soil. Simvastatin is a substituted hexahydronaphtalene-dimethylbutanuate.

It would be desirable to employ (further) nitrification inhibitors which act on ammonia-oxidizing archaea (AOA), and/or comammox bacteria and which preferably can improve the nitrification inhibition when combined with an AOB inhibitor.

The object underlying the present invention is to provide novel nitrification inhibitors. A further object of the present invention is to provide a nitrification inhibitor which acts on microorganisms, specifically on ammonia-oxidizing archaea (AOA).

A further object of the present invention is to provide a fertilizer mixture containing such nitrification inhibitor, a process for its preparation, and a method of fertilizing soils employing it.

The objects are achieved by the use of a pyrazolo[3,4-b]pyridine of the general formula (A)

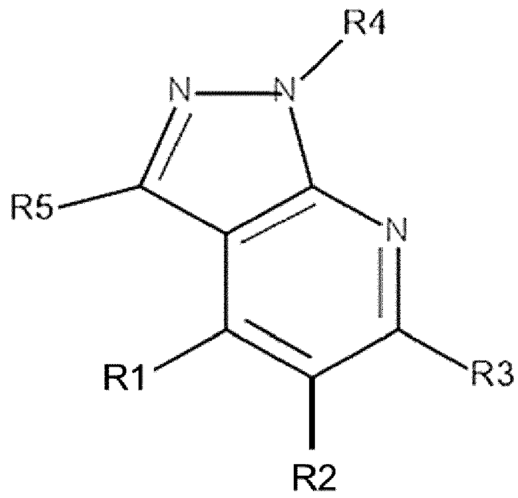

**(A)**

with the following definitions:

R1 hydrogen or C1-12-hydrocarbon residue which can contain one or two heteroatoms, selected from the group consisting of fluor, nitrogen, oxygen and sulfur, preferably an amide or carboxylic acid,
R2 hydrogen or C1-12-hydrocarbon residue which can contain one or two heteroatoms, selected from the group consisting of fluor, nitrogen, oxygen and sulfur, it also being possible for R1 and R2, together with the nitrogen atom joining them, to form a 5- or 6-membered saturated or unsaturated heterocyclic radical, which optionally may also contain one or two further heteroatoms selected from the group consisting of fluor, nitrogen, oxygen and sulfur; R2 preferably is hydrogen,
R3 hydrogen, or C1-12-hydrocarbon residue which can contain one heteroatom, selected from the group consisting of nitrogen, oxygen and sulfur, R3 preferably is hydrogen
R4 hydrogen, or C1-8-hydrocarbon residue, preferably hydrogen
R5 hydrogen or C1-4-alkyl, preferably hydrogen.

as nitrification inhibitor, preferably acting on an inhibiting AOA and/or comammox.

In one embodiment, R1 is hydrogen, methyl, carboxylic acid, carboxamide, methoxycarboxamide or methylcarboxamide.

In one embodiment, R2 is hydrogen, methyl, carboxylic acid, carboxamide, methoxycarboxamide or methylcarboxamide.

In one embodiment, R1 or R2 are hydrogen or methyl.

In one embodiment, R1 and R2 are hydrogen or methyl.

In one embodiment R3 is hydrogen or a C1-C4 hydrocarbon residue which can contain one or two heteroatoms selected from the group consisting of fluor, nitrogen, oxygen and sulfur and preferably is hydrogen, methyl, ethyl or isopropyl.

In one embodiment R4 is hydrogen or a C1-C4 hydrocarbon residue which can contain one or two heteroatoms selected from the group consisting of fluor, nitrogen, oxygen and sulfur and preferably is hydrogen, methyl, ethyl or isopropyl.

In one embodiment R5 is hydrogen or a C1-C4 hydrocarbon residue which can contain one or two heteroatoms selected from the group consisting of fluor, nitrogen, oxygen and sulfur and preferably is hydrogen, methyl, ethyl or isopropyl.

Accordingly, in a preferred embodiment, the compound of the formula (A) has the following side chains:

R1 hydrogen, methyl, carboxylic acid, carboxamide, methoxycarboxamide or methylcarboxamide,

R2 hydrogen, methyl, carboxylic acid, carboxamide, methoxycarboxamide or methylcarboxamide,

with at least R1 or R2 being hydrogen or methyl,

R3 hydrogen or a C1-C4 hydrocarbon residue which can contain one or two heteroatoms selected from the group consisting of fluor, nitrogen, oxygen and sulfur and preferably is hydrogen, methyl, ethyl or iso-propyl,

R4 hydrogen or a C1-C4 hydrocarbon residue which can contain one or two heteroatoms selected from the group consisting of fluor, nitrogen, oxygen and sulfur and preferably is hydrogen, methyl, ethyl or iso-propyl, and

R5 hydrogen or a C1-C4 hydrocarbon residue which can contain one or two heteroatoms selected from the group consisting of fluor, nitrogen, oxygen and sulfur and preferably is hydrogen, methyl, ethyl or iso-propyl.

In one aspect, the pyrazolo[3,4-b]pyridine of the general formula (A) is not a pyrazolo[3,4-b]pyridine-4-carboxamide of the general formula (I) as described in patent claim 1 and the patent claims referring to patent claim 1 of international patent application PCT/EP2021/075026 to the applicant.

In one aspect, the pyrazolo[3,4-b]pyridine of the general formula (A) is not any one of the exemplary compounds 1 to 165 of Table 1 of international patent application PCT/EP2021/075026 to the applicant.

Another object is the use of any one of the pyrazolo[3,4-b]pyridine compounds of the formula (I) to (XX),

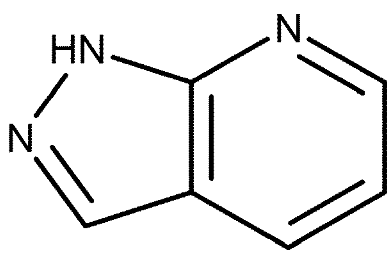

(I)

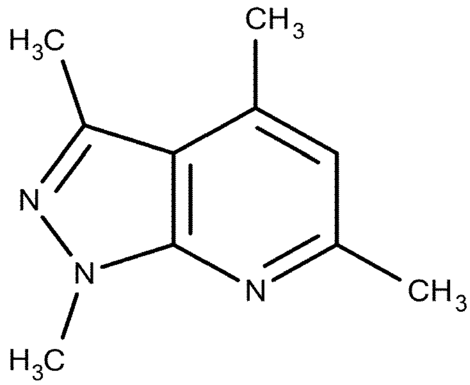

(II)

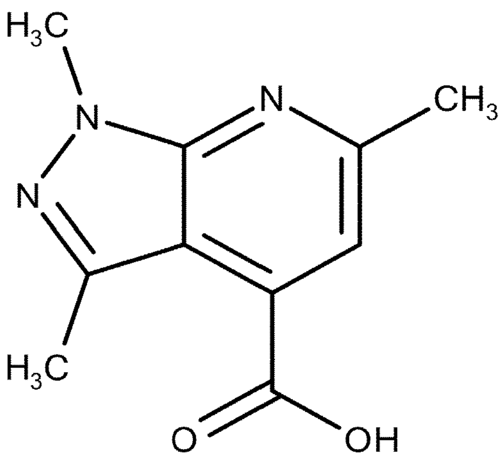

(III)

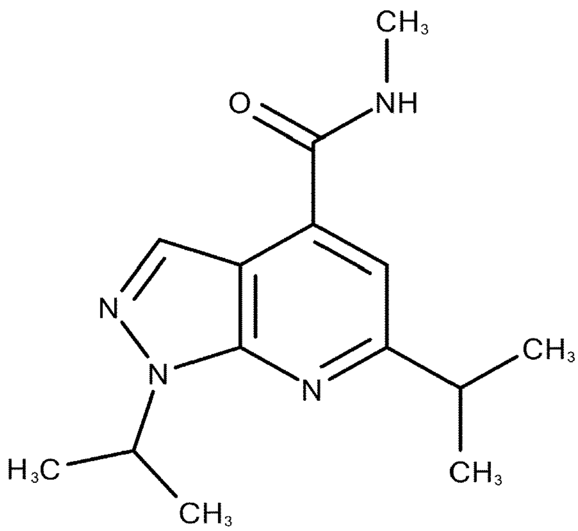

(IV)

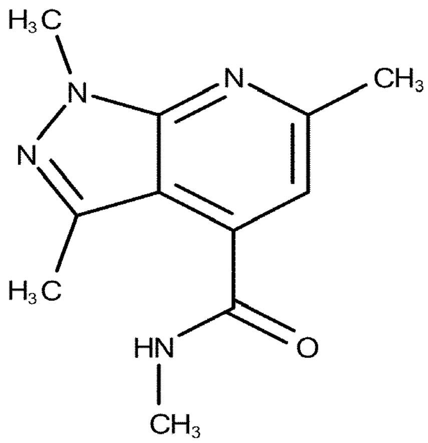

(V)

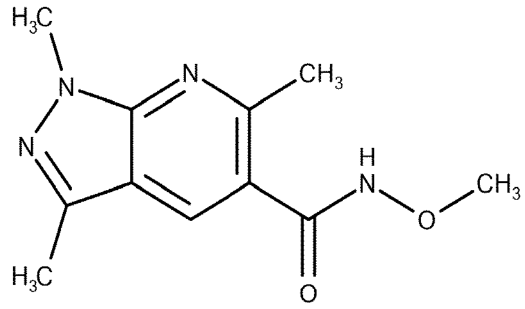

(VI)

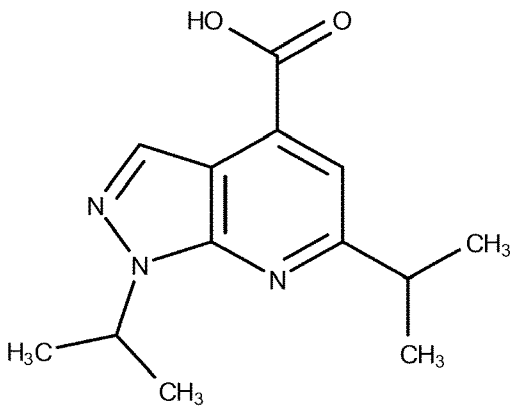

(VII)

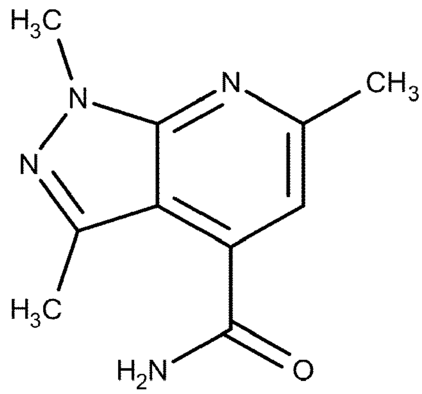

(VIII)

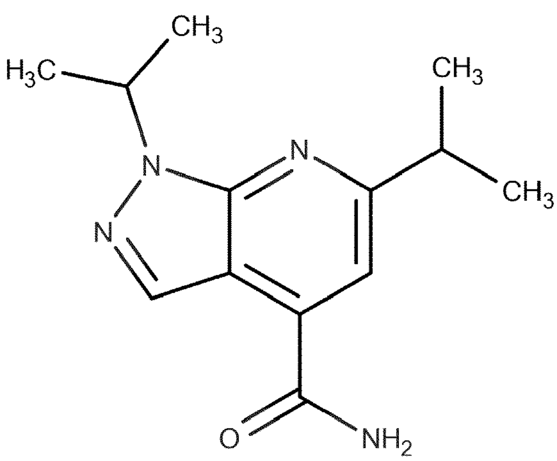

(IX)

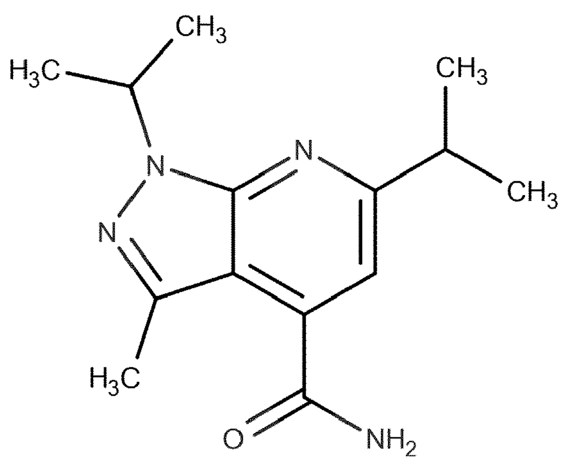

(X)

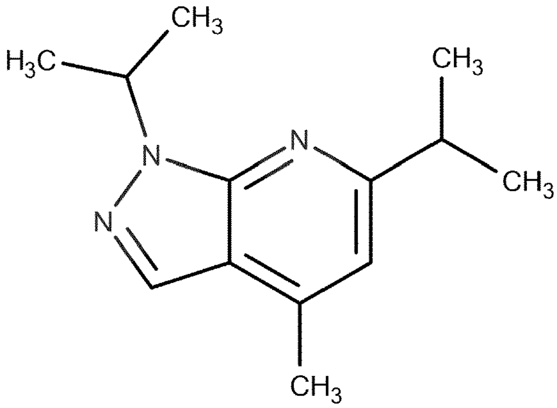

(XI)

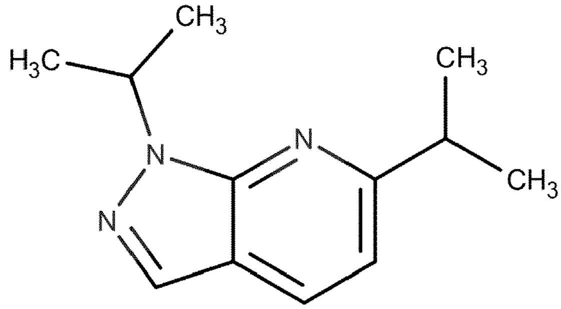

(XII)

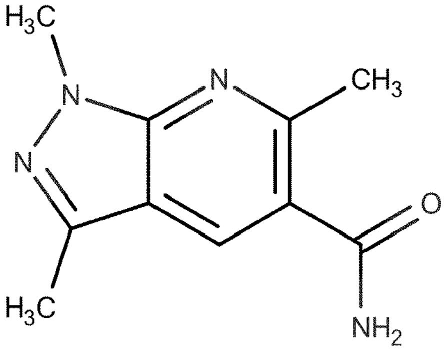

(XIII)

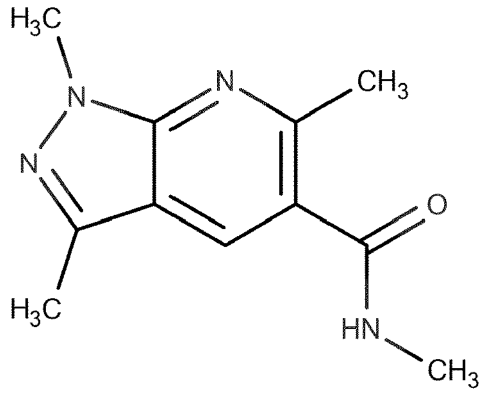

(XIV)

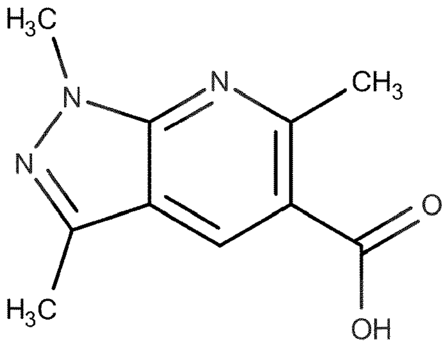

(XV)

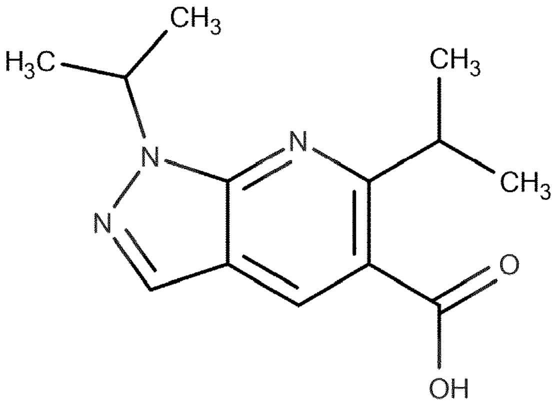

(XVI)

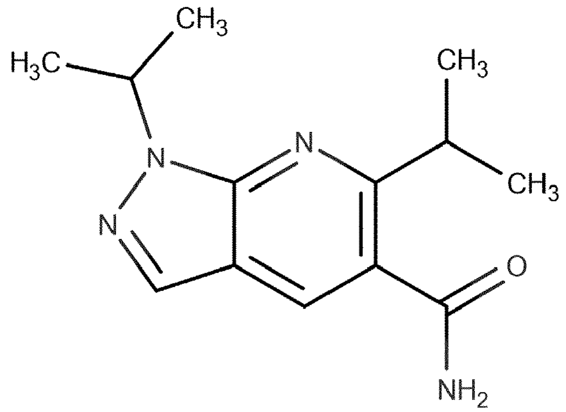

(XVII)

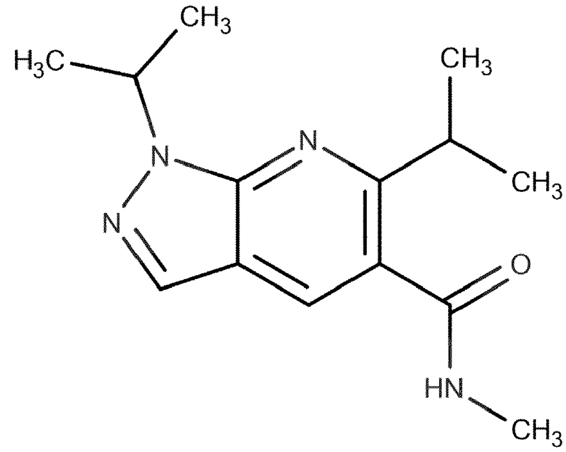

(XVIII)

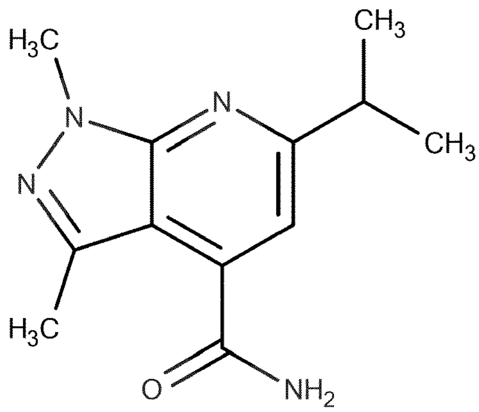

(XVIV)

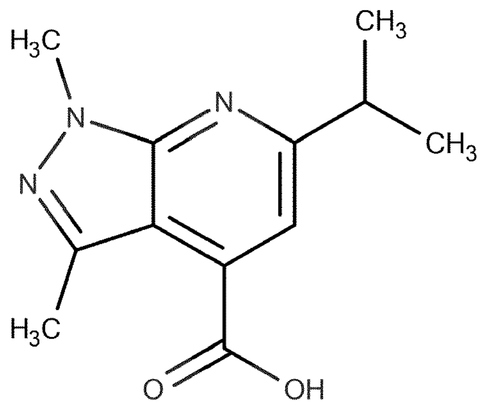

(XX)

as a nitrification inhibitor.

In another aspect, the pyrazolo[3,4-b]pyridine compound is any one of the compounds shown in Table 1 below.

In another aspect, the pyrazolo[3,4-b]pyridine compound in particular of the of the formula (I) to (VIII) inhibits microorganisms selected from the group consisting of ammonia oxidizing archaea (AOA), ammonia-oxidizing bacteria (AOB), or combinations thereof.

In another aspect, the pyrazolo[3,4-b]pyridine compound is a pyrazolo[3,4-b]pyridine compound of the formula (I) and wherein the pyrazolo[3,4-b]pyridine-4-carboxamide of the formula (I) inhibits ammonia oxidizing archaea (AOA) and ammonia-oxidizing bacteria (AOB).

In another aspect, the pyrazolo[3,4-b]pyridine compound of the formula (II) to (XX) is inhibiting ammonia oxidizing archaea (AOA).

In another aspect, the pyrazolo[3,4-b]pyridine compound in particular of the formula (II) to (VIII), even more preferably for the formula (VIII) is administered in combination or in admixture with a compound selected from the group consisting of 2-(3,4-dimethylpyrazol-1-yl)-succinic acid (DMPSA), 3,4-dimethylpyrazole (DMP), 3,4-dimethylpyrazolephosphate (DMPP).

The compounds of the general formula (A) act as nitrification inhibitor. They furthermore also act as nitrogen stabilizer in liquid fertilizers or manure. Fertilizers can be organic and/or inorganic and/or organomineral fertilizers.

The object is furthermore achieved by the use of the pyrazolo[3,4-b]pyridine as an additive or coating material for, preferably inorganic, fertilizers, more preferably ammonium- and/or urea-containing nitrogen fertilizers.

The object is furthermore achieved by the use of pyrazolo[3,4-b]pyridine for reducing the nitrogen or carbon losses in inorganic and/or organic and/or organomineral fertilizers and also on harvest refuse and on grazed land or during the storage of liquid manure, and for lowering the ammonia load in animal stalls.

It may furthermore be advantageous to employ the pyrazolo[3,4-b]pyridine nitrification inhibitor in combination

with or in admixture with an additional agrochemical agent, preferably selected from the group consisting of

- at least one further nitrification inhibitor, preferably selected from the group consisting of 2-(3,4-dimethyl-pyrazol-1-yl)-succinic acid (DMPSA), 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercapto-benzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium trithiocarbonate, 2,3-dihydro-2,2-dimethyl-7-benzofuranol methyl carbamate and N-(2,6-dimethylphenyl)-N-(methoxyacetyl)-alanine methyl ester, comammox inhibitors,

- at least one urease inhibitor, preferably selected from N-n-butylthiophosphoric triamide (NBTPT) and/or N-n-propylthiophosphoric triamide (NPTPT),

- at least one customary agrochemical auxiliary agent, preferably selected from the group consisting of aqueous and/or organic solvents, pH-adjusting agents, surfactants, wetting agents, spreading agents, adhesion promoters, carriers, fillers, viscosity-adjusting agents, emulsifiers, dispersants, sequestering agents, anti-settling agents, coalescing agents, rheology modifiers, defoaming agents, photo-protectors, anti-freeze agents, biostimulants, pesticides, biocides, plant growth regulators, safeners, penetrants, anticaking agents, mineral and/or vegetable oils and/or waxes, colorants and drift control agents,

and mixtures thereof.

When the additional nitrification inhibitor is employed, the weight ratio of pyrazolo[3,4-b]pyridine to the further nitrification inhibitor is preferably 0.1 to 10 : 1, more preferably 0.2 to 5 : 1, most preferably 0.5 to 2 : 1.

Therefore, the nitrification inhibitor according to the present invention can be advantageously used together with or combined with or in admixture with nitrification inhibitors which are preferably inhibiting ammonia-oxidizing bacteria (AOB) and/or comammox bacteria.

Additionally, archaea are not or only weakly targeted by most (AOB) nitrification inhibitors. The novel archaea-targeting nitrification inhibitors, when co-applied with other nitrification inhibitors, synergistically reduced nitrification in agricultural soil. This indicates on one hand that archaea are significantly contributing to nitrification in agricultural soils, and on the other hand, more importantly, that the new type of nitrification inhibitor can be used to even further reduce nitrogen losses, including reduction of greenhouse gas emissions. Analysis of DMP-treated soil for abundance of ammonia oxidizing archaea showed that DMP had, as expected, no inhibiting effect on the presence of archaea. In contrast, in some cases, DMP positively affected the abundance of ammonia-oxidizing archaea. Hence, although DMP inhibits bacterial nitrification, it may enhance archaeal nitrification, probably because DMP blocks bacteria that compete for the same substrate as the archaea. This also explains the synergistic effect. Combining the two types of inhibitors has the potential to further reduce nitrogen losses, and as such N-demand and the detrimental effect of N-fertilizers on environment and climate.

Furthermore, specifically if the inorganic fertilizer contains urea, the nitrification inhibitor can also be used together with or combined with or in admixture with a urease inhibitor, which is preferably selected from N-n-butylthiophosphoric triamide (NBTPT or NBPT) and/or N-n-propylthiophosphoric triamide (NPTPT or NPPT).

If the carboxamide compound of general formula (A) of the present invention is combined with N-n-butylthiophosphoric triamide (NBTPT) and/or N-n-propylthiophosphoric triamide (NPTPT), the weight ratio of nitrification inhibitor(s) to urease inhibitor is preferably in the range of from 0.1 to 10 : 1, more preferably 0.5 to 8 : 1, most preferably 1 to 6 : 1.

Therefore, the invention also relates to a mixture, containing at least one pyrazolo[3,4-b]pyridine of the general formula (A)

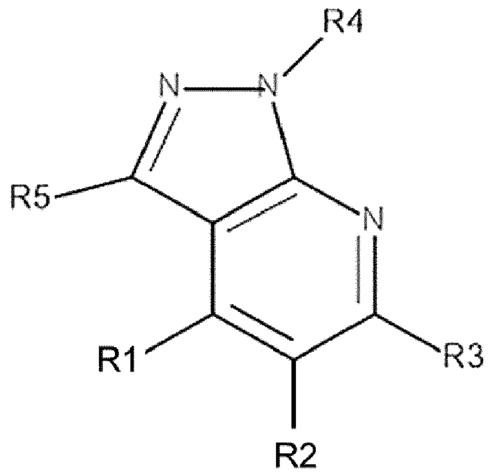

(A)

with the following definitions:

R1 hydrogen or C1-12-hydrocarbon residue which can contain one or two heteroatoms, selected from the group consisting of fluor, nitrogen, oxygen and sulfur, preferably an amide or carboxylic acid,

R2 hydrogen or C1-12-hydrocarbon residue which can contain one or two heteroatoms, selected from the group consisting of fluor, nitrogen, oxygen and sulfur, it also being possible for R1 and R2, together with the nitrogen atom joining them, to form a 5- or 6-membered saturated or unsaturated heterocyclic radical, which optionally may also contain one or two further heteroatoms selected from the group consisting of fluor, nitrogen, oxygen and sulfur; R2 preferably is hydrogen,

R3 hydrogen, or C1-12-hydrocarbon residue which can contain one heteroatom, selected from the group consisting of nitrogen, oxygen and sulfur, R3 preferably is hydrogen;

R4 hydrogen, or C1-8-hydrocarbon residue, preferably hydrogen

R5 hydrogen or C1-4-alkyl, preferably hydrogen,

and at least one additional agrochemical agent, preferably selected from the group consisting of

- at least one further nitrification inhibitor, preferably selected from the group consisting of 2-(3,4-dimethyl-pyrazol-1-yl)-succinic acid (DMPSA), 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercapto-benzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium trithiocarbonate, 2,3-dihydro-2,2-dimethyl-7-benzofuranol methyl carbamate and N-(2,6-dimethylphenyl)-N-(methoxyacetyl)-alanine methyl ester, comammox inhibitors,

- at least one urease inhibitor, preferably selected from N-n-butylthiophosphoric triamide (NBTPT) and/or N-n-propylthiophosphoric triamide (NPTPT),

- at least one customary agrochemical auxiliary agent, preferably selected from the group consisting of aqueous and/or organic solvents, pH-adjusting agents, surfactants, wetting agents, spreading agents, adhesion promoters, carriers, fillers, viscosity-adjusting agents, emulsifiers, dispersants, sequestering agents, anti-settling agents, coalescing agents, rheology modifiers, defoaming agents, photo-protectors, anti-freeze agents, biostimulants, pesticides, biocides, plant growth regulators, safeners, penetrants, anticaking agents, mineral and/or vegetable oils and/or waxes, colorants and drift control agents,

and mixtures thereof.

Preferably, the customary agrochemical auxiliary agent is not an aqueous and/or organic solvent, mineral and/or vegetable oil or wax.

A combination with at least one further nitrification inhibitor and/or urease inhibitor is preferred.

According to the present invention it was found that pyrazolo[3,4-b]pyridine-containing chemical structures are strong new nitrification inhibitors, and target, in contrast to commonly used nitrification inhibitors, ammonia-oxidizing archaea (AOA) and preferably also comammox bacteria, but typically not bacteria (AOB). Therefore, they can be advantageously combined with a further nitrification inhibitor which targets bacteria (AOB) and/or comammox bacteria for enhanced nitrification inhibitory effectiveness.

The new type of nitrification inhibitors is able to inhibit nitrification especially in soil, and if combined with a bacterial nitrification inhibitor, i.e. a nitrification inhibitor acting on ammonia-oxidizing bacteria (AOB) and possibly comammox bacteria inhibitors, increases the efficiency of nitrification inhibition beyond the level that is possible with currently applied inhibitors.

In one aspect, a pyrazolo[3,4-b]pyridine of the general formula (A)

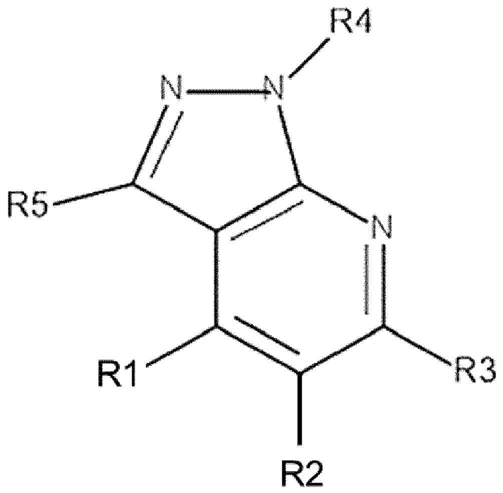

(A)

with the following definitions:

R1 hydrogen or C1-12-hydrocarbon residue which can contain one or two heteroatoms, selected from the group consisting of fluor, nitrogen, oxygen and sulfur, preferably an amide or carboxylic acid,

R2 hydrogen or C1-12-hydrocarbon residue which can contain one or two heteroatoms, selected from the group consisting of fluor, nitrogen, oxygen and sulfur, it also being possible for R1 and R2, together with the nitrogen atom joining them, to form a 5- or 6-membered saturated or unsaturated heterocyclic radical, which optionally may also contain one or two further heteroatoms selected from the group consisting of fluor, nitrogen, oxygen and sulfur; R2 preferably is hydrogen,

R3 hydrogen, or C1-12-hydrocarbon residue which can contain one heteroatom, selected from the group consisting of nitrogen, oxygen and sulfur, R3 preferably is hydrogen;

R4 hydrogen, or C1-8-hydrocarbon residue, preferably hydrogen

R5 hydrogen or C1-4-alkyl, preferably hydrogen,

is employed as nitrification inhibitor on solid fertilizers, preferably in combination with a fertilizer, more preferably an (ammonium) nitrogen-containing fertilizer, e.g. solid or liquid inorganic, organic and/or organomineral fertilizer, or manure. The heterocyclic compound is for example employed as nitrification inhibitor or is employed as nitrogen inhibitor or as nitrogen stabilizer in liquid organic and/or inorganic or organomineral fertilizers or manure.

The pyrazolo[3,4-b]pyridine compounds are mostly known per se and can be synthesized according to standard

techniques. They are partly commercially available compounds and can be obtained from Enamine (SIA Enamine, Vestienas iela 2 B, LV-1035 Riga, Latvia - https://enamine.net/).

Preferably, the compounds of the general formula (A) are free from alkynyl or allenyl groups or structural elements. Preferably, the compounds of general formula (A) do not contain C3-6 alkynyl groups or C3-6 allenyl groups, specifically not those groups which are depicted as R1 in formula I of claim 1 of US 2018/0016199 A1.

Furthermore, preferably, the compounds of the general formula (A) are free from the structural element N=S. More preferably, the compounds of the general formula (A) are free from the structural element C(=O)-N=S, specifically the corresponding structural element depicted in formula 1 in claim 1 of US 2020/0062755 A1.

The compounds of the general formula (A) are annelated or substituted pyrazole compounds.

Specifically, R4 in general formula (A) is not an alkynyl or allenyl group and does not contain an alkynyl or allenyl group, more specifically a C3-6 alkynyl or C3-6 allenyl group, e.g. as disclosed in US 2018/0016199 A1 in formula I as group R1.

In the compounds of the general formula (A), some of the residues are hydrocarbon residues. Hydrocarbon residues are constituted of hydrogen and carbon atoms. They may be saturated, unsaturated or aromatic. Furthermore, they can contain the heteroatoms as identified above. The hydrocarbon residues can be linear, branched, cyclic, or can contain a linear or branched residue and a cyclic residue in the same structure.

If more than one heteroatom is present in the structure, heteroatoms of the same type are not directly covalently linked with each other. Preferably, heteroatoms are not directly covalently linked with other heteroatoms, but they intersect the hydrocarbon residue. Therefore, the heteroatoms are preferably non-adjacent.

Preferably, R1 and/or R5, independently of one another, are hydrogen, methyl or ethyl, more preferably hydrogen or methyl.

Preferably, R2 is a C2-10-hydrocarbon residue, which contains one or two heteroatoms, selected from the group consisting of nitrogen, oxygen and sulfur, and preferably is a C3-8-hydrocarbon residue, which can contain one or two heteroatoms, selected from the group consisting of nitrogen, oxygen and sulfur.

Preferably, R2 contains as heteroatoms one or two oxygen atoms, or one nitrogen atom, or one nitrogen atom and one oxygen atom, or one nitrogen atom and one sulfur atom.

Preferably, R2 is a saturated linear or branched hydrocarbon residue, a linear hydrocarbon residue bearing a cyclic heteroalkyl residue or an aromatic or heteroaromatic residue, wherein the hydrocarbon residue can contain one or two heteroatoms selected from the group consisting of oxygen and nitrogen, or wherein R2 is an unsaturated heterocyclic residue.

Preferably, R3 is a C3-7-hydrocarbon residue which can contain one oxygen atom, preferably a branched or cyclic hydrocarbon residue which can contain one oxygen atom.

Preferably, R4 is C1-8-alkyl, preferably C1-6-alkyl, more preferably C1-4-alkyl. Most preferably, R4 is selected from methyl, ethyl, isopropyl and tert.-butyl.

Alkyl residues can be linear or branched.

Cyclic groups in the residues are preferably 5- or 6-membered rings which can be saturated, unsaturated or aromatic. The rings can be purely hydrocarbon, e.g. phenyl groups. They can also contain nitrogen or oxygen as heteroatoms, preferably one nitrogen or oxygen atom. Examples of those residues are identified in the examples below.

The compounds of the general formula (A) are nitrification inhibitors which inhibit the ammonia-oxidizing archaea (AOA), including the ammonia-oxidizing archaeon Nitrososphaera viennensis, Ammonia Binding Liquid Inoculum (ABIL) and preferably also comammox (complete ammonia oxidation) bacteria like Candidatus Nitrospira kreftii.

The nitrification inhibitor of the present invention is notable in particular for the fact that it effectively inhibits the nitrification of ammonium nitrogen in the soil over a long period of time.

It is expected that the nitrification inhibitor of the present invention possesses favorable toxicological properties, has a low vapor pressure, and is sorbed well in the soil. As a consequence, the nitrification inhibitor is neither emitted to the atmosphere by sublimation to any significant extent nor is easily leached by water. As a result, first of all, economic advantages arise, such as a high profitability in view of the longer-lasting effect of the nitrification inhibitor, and environmental advantages, such as a reduction in the burdening of air (climate gas-reducing) and of surface waters and ground water.

The nitrification inhibitors can be applied to soils or substrates which are fertilized with an inorganic or organic or organomineral fertilizer. Typically, they are employed in a fertilizer mixture comprising an (preferably inorganic) fertilizer and the pyrazolo[3,4-b]pyridine compound. Typically, the pyrazolo[3,4-b]pyridine is employed in an amount of 10 to 10000 ppm by weight, more preferably 100 to 10000 ppm by weight, based on the (preferably inorganic) fertilizer without water. The application amount is based on the dry fertilizer.

The nitrification inhibitor according to the present invention can be employed in substance, in solution, dispersion or emulsion. Therefore, the invention also relates to a solution, dispersion or emulsion containing the pyrazolo[3,4-b]pyridine of the present invention preferably in an amount of from 0.1 to 50 wt%, more preferably 0.5 to 30 wt%, most preferably 1 to 20 wt%.

Preferably, according to the present invention, fertilizers are employed for forming a fertilizer mixture, containing compounds A and B

A. an inorganic and/or organic and/or organomineral fertilizer and

B. 10 to 10000 weight-ppm, more preferably 100 to 10000 weight-ppm, based on the, preferably inorganic, fertilizer, of the pyrazolo[3,4-b]pyridine compound as defined above.

The water fraction in component A and in the fertilizer mixture is often not more than 1.5 wt%, preferably not more than 1.0 wt%, more preferably not more than 0.5 wt%, most preferably not more than 0.3 wt%, and is therefore negligible in the balance of quantities. Components A and B preferably make up at least 95 wt%, more preferably at least 98 wt% of the fertilizer mixture.

The nitrogen content of compound A (without water), is often at least 12 wt%, preferably at least 20 wt%, more preferably at least 22 wt%. For example, the nitrogen content may be 25 to 29 wt%, particularly 26 to 28 wt%. The nitrogen content can be divided between fast-acting nitrate nitrogen and slow-acting ammonium nitrogen.

The inorganic fertilizers preferably are ammonium- and/or urea-containing fertilizers, more preferably ammonium-containing fertilizers which can additionally contain urea.

Urea-containing fertilizers are further described in WO 2016/207210.

The fertilizers employed according to the present invention can be of natural or synthetic origin and are applied to soil or to plant tissues to supply one or more plant nutrients essential to the growth of plants. The fertilizers employed according to the present invention should provide at least nitrogen as nutrient. Further nutrients are for example K and P. Multinutrient fertilizers or complex fertilizers provide two or more nutrients. Inorganic fertilizers exclude carbon-containing materials except ureas. Organic fertilizers are usually plant- or animal-derived matter. Organomineral fertilizers (combinations of inorganic or organic fertilizers) can be employed as well.

The main nitrogen-based straight fertilizer is ammonia or its solutions. Ammonia nitrate is also widely used. Urea is another popular source of nitrogen, having the advantage that it is solid and non-explosive. A further nitrogen-based fertilizer is calcium ammonium nitrate.

The main straight phosphate fertilizers are the superphosphates including single superphosphate, phosphogypsum and triple superphosphate. The main potassiumbased straight fertilizer is muriate of potash (MOP).

The binary fertilizers are preferably NP or NK fertilizers which can be monoammonium phosphate (MAP) and diammonium phosphate (DAP).

NPK fertilizers are three-component fertilizers providing nitrogen, phosphorus and potassium. NPK fertilizers can be produced by mixing straight fertilizers as mentioned above in bulk or in each granule, as in Nitrophoska®. In some cases, chemical reactions can occur between the two or more components.

Besides the main constituents, like N, P and K, micronutrients (trace elements) may be present in the fertilizers. The main micronutrients are molybdenum, zinc, boron and copper. These elements are typically provided as water-soluble salts.

Preferred fertilizers contain ammonium or urea. Examples of preferred ammonium-containing fertilizers are NPK fertilizers, calcium ammonium nitrate, ammonium sulfate nitrate, ammonium sulfate and ammonium phosphate.

Further preferred ingredients of the fertilizer compositions are for example trace elements, further minerals, standardizers, binders.

Organic fertilizers can describe those fertilizers with an organic or biologic origin, i.e. fertilizers derived from living or formerly living materials, like animals or plants or algae. Fertilizers of an organic origin include animal wastes, plant wastes, e.g. from food processing or agriculture, compost, and treated sewage sludge (biosolids). Animal sources can be manures, but also products from the slaughter of animals, like blood meal, bone meal, feather meal, hides, hooves, and horns.

Soil amendments, like peat or coir, bark and sawdust can also be included.

Fertilizers can include without limitation, ammonium sulfate, ammonium nitrate, ammonium sulfate nitrate, ammonium chloride, ammonium bisulfate, ammonium polysulfide, ammonium thiosulfate, aqueous ammonia, anhydrous ammonia, ammonium polyphosphate, aluminum sulfate, calcium nitrate, calcium ammonium nitrate, calcium sulfate, calcined magnesite, calcitic limestone, calcium oxide, hampene (chelated iron), dolomitic limestone, hydrate lime, calcium carbonate, diammonium phosphate, monoammonium phosphate, potassium nitrate, potassium bicarbonate, monopotassium phosphate, magnesium nitrate, magnesium sulfate, potassium sulfate, potassium chloride, sodium nitrates, magnesian limestone, magnesia, disodium dihydromolybdate, cobalt chloride hexahydrate, nickel chloride hexahydrate, indole butyric acid, L-tryptophan, urea, urea-formaldehydes, urea ammonium nitrate, sulfur-coated urea, polymer-coated urea, isobutylidene diurea, K2SO4-2MgSO4, kainite, sylvinite, kieserite, Epsom salts, elemental sulfur, marl, ground oyster shells, fish meal, oil cakes, fish manure, blood meal, rock phosphate, super phosphates, slag, bone meal, wood ash, biochar, algae, algae extracts, struvite, manure, bat guano, peat moss, compost, green sand, cottonseed meal,

feather meal, crab meal, fish emulsion or a combination thereof. The micronutrient fertilizer material can comprise boric acid, a borate, a boron frit, copper sulfate, a copper frit, a copper chelate, a sodium tetraborate decahydrate, an iron sulfate, an iron oxide, iron ammonium sulfate, an iron frit, an iron chelate, a manganese sulfate, a manganese oxide, a manganese chelate, a manganese chloride, a manganese frit, a sodium molybdate, molybdic acid, a zinc sulfate, a zinc oxide, a zinc carbonate, a zinc frit, zinc phosphate, a zinc chelate or a combination thereof. In a particular embodiment, said fertilizer or fertilizer composition does not comprise insoluble selenium, selenium mineral, soluble selenium or salts thereof.

The treated (inorganic, organic or organomineral) fertilizers according to the invention are preferably present in powder form, prill form or in granule form.

Besides the heterocyclic carboxamide compound of formula (I), formulations comprising the compound and agronomical adjuvants can be used for including the nitrification inhibitor in the fertilizer. Agronomical adjuvants are for example solvents, dispersants, pH-adjusting agents, filler, stability improvers, surfactants.

The nitrification inhibitor can be included in the fertilizer mixture by mixing it or the formulation containing it with a solid or liquid fertilizer or fertilizer formulation. Preferably, the fertilizer mixture is in solid form and the nitrification inhibitor is applied to the surface of the (inorganic, organic or organomineral) fertilizer.

In a process for producing the fertilizer mixture of the present invention, the nitrification inhibitor or the formulation containing it can be introduced into the (inorganic, organic or organomineral) fertilizer and/or applied to the surface of the (inorganic, organic or organomineral) fertilizer.

Granules of fertilizers are impregnated or coated with the nitrification inhibitor, for example by being sprayed with a formulation like a solution or a dispersion of the nitrification inhibitor and subsequent drying. The method is known, for example, from DE-A-41 28 828. The sealing of the impregnated granules with for example a paraffin wax, which is an additional proposal in the latter document, is possible, but generally unnecessary.

Granulating assistants which can be employed for preparing solid fertilizer compositions can be lime, gypsum, silicon dioxide or kaolinite.

An alternative is the addition of the nitrification inhibitor during the actual production of the fertilizer, in the slurry, for example.

As a rule, nitrification inhibitors are customarily applied to the soil in amounts of 100 g/ha to 10 kg/ha. Preferably, the amount is in the range of from 200g/ha to 5 kg/ha.

Delivery of the nitrification inhibitor in liquid fertilizer formulations may be accomplished, for example, by fertigation with or without excess water as described in DE-C-102 30 593.

The fertilizer mixture can contain at least one further nitrification inhibitor. Preferably, this at least one further nitrification inhibitor is inhibiting ammonia-oxidizing bacteria (AOB) and is preferably selected from the group consisting of 2-(3,4-dimethyl-pyrazol-1-yl)-succinic acid, 3,4-dimethylpyrazole (DMP), 3,4-dimethylpyrazolephosphate (DMPP), dicyandiamide (DCD), 1H-1,2,4-triazole, 3-methylpyrazole (3-MP), 2-chloro-6-(trichloromethyl)-pyridine, 5-ethoxy-3-trichloromethyl-1,2,4-thiadiazol, 2-amino-4-chloro-6-methyl-pyrimidine, 2-mercapto-benzothiazole, 2-sulfanilamidothiazole, thiourea, sodium azide, potassium azide, 1-hydroxypyrazole, 2-methylpyrazole-1-carboxamide, 4-amino-1,2,4-triazole, 3-mercapto-1,2,4-triazole, 2,4-diamino-6-trichloromethyl-5-triazine, carbon bisulfide, ammonium thiosulfate, sodium tri-thiocarbonate, 2,3-dihydro-2,2-dimethyl-7-benzofuranol methyl carbamate and N-(2,6-dimethylphenyl)-N-(methoxyacetyl)-alanine methyl ester.

When the additional nitrification inhibitor is employed, the weight ratio of pyrazolo[3,4-b]pyridine to the further nitrification inhibitor is preferably 0.1 to 10 : 1, more preferably 0.2 to 5 : 1, most preferably 0.5 to 2 : 1.

Furthermore, the fertilizer mixture can contain at least one urease inhibitor, which is preferably selected from N-n-butylthiophosphoric triamide (NBTPT or NBPT) and/or N-n-propylthiophosphoric triamide (NPTPT or NPPT). A urease inhibitor is typically added when the fertilizer contains urea. Urea nitrogen is liberated as ammonium by the action of urease, and the ammonium can undergo nitrification. Therefore, it can be advantageous to combine a urease inhibitor with the nitrification inhibitor.

If the pyrazolo[3,4-b]pyridine of the present invention is combined with N-n-butylthiophosphoric triamide (NBTPT) and/or N-n-propylthiophosphoric triamide (NPTPT), the weight ratio of nitrification inhibitor to urease inhibitor is preferably in the range of from 0.1 to 10 : 1, more preferably 0.5 to 8 : 1, most preferably 1 to 6 : 1.

Thiophosphoric triamides are known to be relatively easily converted to the corresponding phosphoric triamides and thiophosphoric diamides as well as other metabolites. Since, generally speaking, moisture cannot be entirely excluded, thiophosphoric triamide and the corresponding phosphoric triamide are frequently present in a mixture with one another. In this specification, therefore, the term "(thio)phosphoric triamide" identifies not only the pure thiophosphoric triamides and phosphoric triamides, respectively, but also mixtures thereof.

According to the present invention, also mixtures of N-(n-butyl)thiophosphoric triamide and N-(n-)propylthiophosphoric triamide can be employed, as described in EP-A-1 820 788.

The fertilizer mixtures can contain other ingredients, like coatings, for example of inorganic or organic polyacids, which are described in US 6,139,596.

Furthermore, coatings of powders, prills and granules can be formed of inorganic material, such as sulfur- or mineral-based coatings, or with an organic polymer. Respective coatings are described in WO 2013/121384 on page 23, line 37 to page 24, line 16.

As stated above, the agrochemical formulations comprising the compounds of formula (I) are used in "effective amounts". This means that they are used in a quantity which allows to obtain the desired effect which is a (synergistic) increase of the health of a plant but which does not give rise to any phytotoxic symptom on the treated plant.

For use according to the present invention, the agrochemical formulations comprising the compounds of formula (I) can be converted into the customary formulations, for example solutions, emulsions, suspensions, dusts, powders, pastes and granules. The use form depends on the particular intended purpose; in each case, it should ensure a fine and even distribution of the agrochemical formulations comprising the compounds of formula (I) according to the present invention. The formulations are prepared in a known manner to the person skilled in the art.

The agrochemical formulations may also comprise auxiliaries which are customary in agrochemical formulations. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and inorganic thickeners, bactericides, antifreezing agents, anti-foam ing agents, if appropriate colorants and tackifiers or binders (e.g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g. ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsulfonic acid, phenolsulfonic acid, naphthalenesulfonic acid, dibutylnaphthalenesulfonic acid and fatty acids, alkylsulfonates, alkyl-arylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxyethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquid and proteins, denatured proteins, polysaccharides (e.g. methylcellulose), hydrophobically modified starches, polyvinyl alcohols, polycarboxylates types, polyalkoxylates, polyvinylamines, polyvinylpyrrolidone and the copolymers therof. Examples for thickeners (i.e. compounds that impart a modified flowability to formulations, i.e. high viscosity under static conditions and low viscosity during agitation) are polysaccharides and organic and inorganic clays such as Xanthan gum.

A 'pesticide' is something that prevents, destroys, or controls a harmful organism ('pest') or disease, or protects plants or plant products during production, storage and transport.

The term includes, amongst others: herbicides, fungicides, insecticides, acaricides, nematicides, molluscicides, rodenticides, growth regulators, repellents, rodenticides and biocides as well as plant protection products.

Plant protection products are 'pesticides' that protect crops or desirable or target plants. They are primarily used in the agricultural sector but also in forestry, horticulture, amenity areas and in home gardens. They contain at least one active substance and have one of the following functions:

- protect plants or plant products against pests/diseases, before or after harvest;
- influence the life processes of plants (such as substances influencing their growth, excluding nutrients);
- preserve plant products;
- destroy or prevent growth of undesired plants or parts of plants.

They may also contain other components including safeners and synergists.

An active substance is any chemical, plant extract, pheromone or micro-organism (including viruses), that has action against 'pests' or on plants, parts of plants or plant products.

The most common use of pesticides is in the form of plant protection products (PPPs).

The term 'pesticide' is often used interchangeably with 'plant protection product', however, pesticide is a broader term that also covers non plant/crop uses, for example biocides.

Biocides, like herbicides, bactericides, molluscicides, algicides, phytotoxicants, fungicides, and their mixtures can be added.

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® M BS from Thor Chemie). Examples for suitable antifreezing agents are ethylene glycol, propylene glycol, urea and glycerin. Examples for anti-foaming agents are silicone emulsions (such as e.g. Silikon® SRE, Wacker, Germany or Rhodorsil®, Rhodia, France), long chain alcohols, fatty acids, salts of fatty acids, fluoroorganic compounds and agrochemical formulations comprising the compounds of formula (I) thereof.

Suitable colorants are pigments of low water solubility and solvent-soluble, e.g.water-soluble, dyes.

Examples for adhesion promoters, like tackifiers or binders, are polyvinylpyrrolidons, polyvinylacetates, polyvinyl alcohols and cellulose ethers (Tylose®, Shin-Etsu, Japan).

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Anticaking agents like oils and/or waxes can be added.

The agrochemical formulations generally comprise between 0.01 and 95%, preferably between 0.1 and 90%, most preferably between 0.5 and 90%, by weight of active substances. The compounds of the agrochemical formulations comprising the compounds of formula (I) are employed in a purity of from 90% to 100%, preferably from 95% to 100% (according to their NMR spectrum).

The compounds of the agrochemical formulations comprising the compounds of formula (I) can be used as such or in the form of their agricultural compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in the agrochemical formulations comprising the compounds of formula (I).

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1%, by weight of compounds of the agrochemical formulations comprising the compounds of formula (I).

The compounds of the agrochemical formulations comprising the compounds of formula (I) may also be used successfully in the ultra-low-volume process (ULV), it being possible to apply compositions comprising over 95% by weight of active substance, or even to apply the active substance without additives.

Various types of oils, wetters, adjuvants, herbicides, fungicides, other pesticides, or bactericides may be added to the active compounds, if appropriate not until immediately prior to use (tank mix). These agents can be admixed with the compounds of the agrochemical formulations comprising the compounds of formula (I) in a weight ratio of 1:100 to 100:1, preferably 1:10 to 10:1.

Compositions of this invention may also contain fertilizers (such as ammonium nitrate, urea, potash, and superphosphate), phytotoxicants and plant growth regulators (plant growth amendments) and safeners. These may be used sequentially or in combination with the above-described compositions, if appropriate also added only immediately prior to use (tank mix). For example, the plant(s) may be sprayed with a composition of this invention either before or after being treated with the fertilizers.

In the agrochemical formulations comprising the compounds of formula (I), the weight ratio of the compounds generally depends from the properties of the compounds of the agrochemical formulations comprising the compounds of formula (I).

The compounds of the agrochemical formulations comprising the compounds of formula (I) can be used individually or already partially or completely mixed with one another to prepare the composition according to the invention. It is also possible for them to be packaged and used further as combination composition such as a kit of parts.

The user applies the composition according to the invention usually from a pre-dosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquid or the agrochemical composition according to the invention is thus obtained. Usually, 50 to 500 liters of the ready-to-use spray liquid are applied per hectare of agricultural useful area, preferably 50 to 400 liters.

In a particular embodiment the absolute amount of the active compounds, represented by formula (I), is used in a range between 1 mg/liter to 100 mg/liter, particularly in a range between 1 mg/l to 20 mg/l, particularly in a range between 1 mg/l to 25 mg/l, particularly in a range between 2 mg/l to 200 mg/l, particularly between 2 mg/l to 100 mg/l, particularly between 2 mg/l to 50 mg/l, particularly between 2 mg/l to 25 mg/l, particularly between 4 mg/l to 40 mg/l, particularly between 4 mg/l to 20 mg/l, particularly between 4 mg/l to 16 mg/l, particularly between 4 mg/l to 12 mg/l.

According to one embodiment, individual compounds of the agrochemical formulations comprising the compounds of formula (I) formulated as composition (or formulation) such as parts of a kit or parts of the inventive mixture may be mixed by the user himself in a spray tank and further auxiliaries may be added, if appropriate (tank mix).

"Agrochemical", as used herein, means any active substance that may be used in the agrochemical industry (including agriculture, horticulture, floriculture and home and garden uses, but also products intended for non-crop related uses such as public health/pest control operator uses to control undesirable insects and rodents, household uses, such as household fungicides and insecticides and agents, for protecting plants or parts of plants, crops, bulbs, tubers, fruits (e.g. from harmful organisms, diseases or pests); for controlling, preferably promoting or increasing, the growth of plants; and/or for promoting the yield of plants, crops or the parts of plants that are harvested (e.g. its fruits, flowers, seeds etc.).

An "agrochemical composition" as used herein means a composition for agrochemical use, as herein defined, comprising at least one active substance of a compound of formula (I), optionally with one or more additives favoring optimal dispersion, atomization, deposition, leaf wetting, distribution, retention and/or uptake of agrochemicals. As a non-limiting example such additives are diluents, solvents, adjuvants, surfactants, wetting agents, spreading agents, oils, stickers, viscosity-adjusting agents (like thickeners, penetrants), pH-adjusting agents (like buffering agents, acidifiers), anti-settling agents, anti-freeze agents, photo-protectors, defoaming agents, biocides and/or drift control agents.

A "carrier", as used herein, means any solid, semi-solid or liquid carrier in or on(to) which an active substance can be suitably incorporated, included, immobilized, adsorbed, absorbed, bound, encapsulated, embedded, attached, or comprised. Non-limiting examples of such carriers include nanocapsules, microcapsules, nanospheres, microspheres, nanoparticles, microparticles, liposomes, vesicles, beads, a gel, weak ionic resin particles, liposomes, cochleate delivery vehicles, small granules, granulates, nano-tubes, bucky-balls, water droplets that are part of an water-in-oil emulsion, oil droplets that are part of an oil-in-water emulsion, organic materials such as cork, wood or other plant-derived materials (e.g. in the form of seed shells, wood chips, pulp, spheres, beads, sheets or any other suitable form), paper or cardboard, inorganic materials such as talc, clay, microcrystalline cellulose, silica, alumina, silicates and zeolites, or even microbial cells (such as yeast cells) or suitable fractions or fragments thereof.

The terms "effective amount", "effective dose" and "effective amount", as used herein, mean the amount needed to achieve the desired result or results. More exemplary information about amounts, ways of application and suitable ratios to be used is given below. The skilled artisan is well aware of the fact that such an amount can vary in a broad range and is dependent on various factors such as the treated cultivated plant as well as the climatic and soil conditions.

As used herein, the terms "determining", "measuring", "assessing", "monitoring" and "assaying" are used interchangeably and include both quantitative and qualitative determinations.

It is understood that the agrochemical composition is stable, both during storage and during utilization, meaning that the integrity of the agrochemical composition is maintained under storage and/or utilization conditions of the agrochemical composition, which may include elevated temperatures, freeze-thaw cycles, changes in pH or in ionic strength, UV-irradiation, presence of harmful chemicals and the like. More preferably, the compounds of formula (I) as herein described remain stable in the agrochemical composition, meaning that the integrity and the activity of the compounds are maintained under storage and/or utilization conditions of the agrochemical composition, which may include elevated temperatures, freeze-thaw cycles, changes in pH or in ionic strength, UV-irradiation, presence of harmful chemicals and the like. Most preferably, said compounds of formula (I) remain stable in the agrochemical composition when the agrochemical composition is stored at ambient temperature for a period of two years or when the agrochemical composition is stored at 54°C for a period of two weeks. Preferably, the agrochemical composition of the present invention retains at least about 70% activity, more preferably at least about 70% to 80% activity, most preferably about 80% to 90% activity or more. Examples of suitable carriers include, but are not limited to alginates, gums, starch, □-cyclodextrins, celluloses, polyurea, polyurethane, polyester, or clay.

The agrochemical composition may occur in any type of formulation, preferred formulations are powders, wettable powders, wettable granules, water dispersible granules, emulsions, emulsifiable concentrates, dusts, suspensions, suspension concentrates, suspoemulsions, capsule suspensions, aqueous dispersions, oil dispersions, aerosols, pastes, foams, slurries or flowable concentrates.

The agrochemical composition according to the invention can be applied once to a crop, or it can be applied

two or more times after each other with an interval between every two applications. The agrochemical composition according to the invention can be applied alone or in mixture with other materials, preferably other agrochemical compositions, to the crop; alternatively, the agrochemical composition according to the invention can be applied separately to the crop with other materials, preferably other agrochemical compositions, applied at different times to the same crop.

In yet another embodiment the invention provides a method for the manufacture of ('or the production of' which is equivalent wording) an agrochemical composition according to the invention, comprising formulating a molecule of formula (I) as defined herein before, together with at least one customary agrochemical auxiliary agent. Suitable manufacturing methods are known in the art and include, but are not limited to, high or low shear mixing, wet or dry milling, drip-casting, encapsulating, emulsifying, coating, encrusting, pilling, extrusion granulation, fluid bed granulation, co-extrusion, spray drying, spray chilling, atomization, addition or condensation polymerization, interfacial polymerization, in situ polymerization, coacervation, spray encapsulation, cooling melted dispersions, solvent evaporation, phase separation, solvent extraction, sol-gel polymerization, fluid bed coating, pan coating, melting, passive or active absorption or adsorption.

Customary agrochemical auxiliary agents are well-known in the art and preferably include, but are not limited to aqueous and/or organic solvents, pH-adjusting agents (like buffering agents, acidifiers), surfactants, wetting agents, spreading agents, adhesion promoters (like tackifiers, stickers), carriers, fillers, viscosity-adjusting agents (like thickeners), emulsifiers, dispersants, sequestering agents, anti-settling agents, coalescing agents, rheology modifiers, defoaming agents, photo-protectors, anti-freeze agents, biostimulants (including bacterial and/or fungal inoculants or microorganisms), biocides (preferably selected from herbicides, bactericides, phytotoxicants, fungicides, pesticides and mixtures thereof), plant growth regulators, safeners, penetrants, anticaking agents, mineral and/or vegetable oils and/or waxes, colorants and drift control agents or any suitable combination thereof.

The insecticide can include an organophosphate, a carbamate, a pyrethroid, an acaricide, an alkyl phthalate, boric acid, a borate, a fluoride, sulfur, a haloaromatic substituted urea, a hydrocarbon ester, a biologically-based insecticide, or a combination thereof. The herbicide, used to remove unwanted plants, can comprise a chlorophenoxy compound, a nitrophenolic compound, a nitrocresolic compound, a dipyridyl compound, an acetamide, an aliphatic acide, an anilide, a benzamide, a benzoic acid, a benzoic acid derivative, anisic acid, an anisic acid derivative, a benzonitrile, benzothiadiazinone dioxide, a thiocarbamate, a carbamate, carbanilate, chloropyridinyl, a cyclohexenone derivative, a dinitroaminobenzene derivative, a fluorodinitrotoluidine compound, isoxazolidinone, nicotinic acide, isopropylamine, an isopropylamine derivative, oxadiazolinone, a phosphate, a phthalate, a picolinic acid compound, a triazine, a triazole, a uracil, a urea derivative, endothall, sodium chlorate, or a combination thereof. The fungicide can comprise a substituted benzene, a thiocarbamate, an ethylene bis dithiocarbamate, a thiophthalidamide, a copper compound, an organomercury compound, an organotin compound, a cadmium compound, anilazine, benomyl, cyclohexamide, dodine, etridiazole, iprodione, metlaxyl, thiamimefon, triforine, or a combination thereof. The fungal inoculant can comprise a fungal inoculant of the family Glomeraceae, a fungal inoculant of the family Claroidoglomeraceae, a fungal inoculant of the family Acaulosporaceae, a fungal inoculant of the family Sacculospraceae, a fungal inoculant of the family Entrophosporaceae, a fungal inoculant of the family Pacidsproraceae, a fungal inoculant of the family Diversisporaceae, a fungal inoculant of the family Paraglomeraceae, a fungal inoculant of the family Archaeosporaceae, a fungal inoculant of the family Geosiphonaceae, a fungal inoculant of the family Ambisporacea, a fungal inoculant of the family Scutellosproaceae, a fungal inoculant of the family Dentiscultataceae, a fungal inoculant of the family Racocetraceae, a fungal inoculant of the phylum Basidiomycota, a fungal inoculant of the phylum Ascomycota, a fungal inoculant of the phylum Zygomycota, a fungal inoculant of the genus Glomus or a combination thereof. The bacterial inoculant can include a bacterial inoculant of the genus Rhizobium, bacterial inoculant of the genus Bradyrhizobium, bacterial inoculant of the genus Mesorhizobium, bacterial inoculant of the genus Azorhizobium, bacterial inoculant of the genus Allorhizobium, bacterial inoculant of the genus Burkholderia, bacterial inoculant of the genus Sinorhizobium, bacterial inoculant of the genus Kluyvera, bacterial inoculant of the genus Azotobacter, bacterial inoculant of the genus Pseudomonas, bacterial inoculant of the genus Azosprillium, bacterial inoculant of the genus Bacillus, bacterial inoculant of the genus Streptomyces, bacterial inoculant of the genus Paenibacillus, bacterial inoculant of the genus Paracoccus, bacterial inoculant of the genus Enterobacter, bacterial inoculant of the genus Alcaligenes, bacterial inoculant of the genus Mycobacterium, bacterial inoculant of the genus Trichoderma, bacterial inoculant of the genus Gliocladium, bacterial inoculant of the genus Klebsiella, or a combination thereof.

Also, the mixture can comprise additionally at least one microorganism selected from the list consisting of Bacillus subtilis strain 713, Bacillus amyloliquefaciens MBI 600, Bacillus pumillus QST2808, Pseudomonas fluorescens, Bradyrhizobium japonicum, Trichoderma vireus, Pseudomonas putida, Trichoderma harzianum Rifai strain T22, Penicillium bilaii, Mesorhizobium, Azospirillum, Azotobacter vinelandii and Clostridium pasteurianum, Glomus species.

The pyrazolo[3,4-b]pyridines employed according to the present invention can be employed in combination with these auxiliaries. The auxiliaries used depend on the particular application form and the active substance and preferably include solvents, solid carriers, dispersants or emulsifiers, such as solubilizers, protective colloids, surfactants and adhesion agents. Furthermore, organic and inorganic thickeners, bactericides, antifreezing agents, anti-foaming

agents, if appropriate, colorants and tackifiers or binders can be employed in combination with the nitrification inhibitors and in the fertilizer mixture. Suitable auxiliaries are discussed in WO 2013/121384 on pages 25 to 26.

Further possible preferred ingredients are oils, wetters, adjuvants, biostimulants, herbicides, bactericides, other fungicides and/or pesticides. They are for example discussed in WO 2013/121384 on pages 28/29.

The fertilizer mixtures are preferably in solid form, including powders, prills and granules. Furthermore, it is possible to deliver the nitrification inhibitor in the form of a formulation, solution or dispersion separately or simultaneously with a fertilizer.

Furthermore, the nitrification inhibitor of the present invention can be used for reducing the nitrogen losses in organic fertilizers and also on harvest refuse and on grazed land or during the storage of liquid manure and following the ammonium load in animal stalls.

For respective applications, reference can be made to US 6,139,596 and WO 2013/121384 as well as WO 2015/086823 and WO 2016/207210.

The present invention also relates to a method of fertilizing soils exploited agriculturally or horticulturally, wherein a fertilizer mixture containing compounds A and B

A. an inorganic and/or organic and/or organomineral fertilizer and

B. 10 to 10000 weight-ppm, based on the fertilizer, of a pyrazolo[3,4-b]pyridine as defined above,

or compounds A and B separately, but within a period of 0 to 5 hours, preferably 0 to 1 hour, more preferably approximately at the same time,
is applied to the soils.

In parallel with the improvement of the utilization of nitrogen in the ammonium- or urea-containing mineral, organic and organomineral fertilizers, the use of the nitrification inhibitors, according to the present invention, and of compositions containing them has the effect that there is an increase, in some cases considerably, in the yields and production of biomass of crop plants.

Equally, the nitrification inhibitor according to the invention may be added to organic fertilizers, such as liquid manure, for example, during the actual storage of such fertilizers in order to prevent nitrogen nutrient losses by virtue of a decelerated conversion of the individual forms of nitrogen into gaseous, therefore volatile, nitrogen compounds, and, at the same time, to contribute to a lowering of the ammonia load in animal stalls. Moreover, the nitrification inhibitor or compositions containing the nitrification inhibitor may be used on agricultural stovers and grazed land for the purpose of reducing gaseous nitrogen losses and for preventing instances of nitrate leaching.

Generally, the pyrazole[3,4-b]pyramine-4-carboxamide of the general formula (A) can be used for reducing the nitrogen or carbon losses in inorganic and/or organic and/or organomineral fertilizers or nitrogen- or carbon-containing compounds or materials and also on harvest refuse and on grazed land or during the storage of liquid manure and for lowering the ammonia load in animal stalls.

Nitrogen losses are often due to N2O and/or NO emissions or NO3- leaching. Nitrogen losses can occur in nitrogen-containing compounds or materials, examples of which are roots, plants, fertilizers, animals, etc. Typically, nitrogen losses occur from nitrogen-containing mineral fertilizers or any organic nitrogen-containing matter. The term "nitrogen losses" encompasses all forms of nitrogen or nitrogen compounds which are lost via emissions or leaching, as indicated above. One example are greenhouse gas emissions that can be lowered by the use of the N-heterocyclic compound of the present invention.

The same is true for carbon losses which can occur in carbon-containing compounds or materials. Carbon-containing compounds or materials are for example carbonatecontaining mineral fertilizers and carbon-containing organic matter, like roots, plants, animals, organic fertilizers, etc. Carbon losses often occur as CO2 emissions, which are part of the greenhouse gas emissions.

Therefore, the compounds of the present invention can be used for preventing or reducing greenhouse gas emissions from nitrogen- or carbon-containing compounds or materials. These materials often contain nitrogen and/or carbon in covalently or ionically bonded form, e.g. in the form of ammonium, protein, nitrate, carbonate, carbohydrates, cellulose, or other organic carbon-containing compounds. Thus, the terms "carbon" and "nitrogen" can refer to the elemental form or to compounds or materials containing carbon and/or nitrogen atoms.

Nitrogen- and/or carbon-containing compounds or materials can be present in fertilizers, in soil, or in the environment. The most prominent effect of the N-heterocyclic compounds of the present invention is the reduction of greenhouse gas emissions from soil containing nitrogen-containing compounds or materials.

Most efficient is the reduction of greenhouse gas emissions from fertilized soil. These greenhouse gas emissions are often caused by processes downstream of nitrification.

The plants to be treated or rooted in soil to be treated according to the invention are preferably selected from the group consisting of agricultural, silvicultural, ornamental and horticultural plants, each in its natural or genetically

modified form. Preferably, nontransgenic agricultural plants are treated.

Preferred agricultural plants are field crops selected from the group consisting of potatoes, sugar beets, wheat, barley, rye, oat, sorghum, rice, maize, cotton, rapeseed, oilseed rape, canola, soybeans, peas, field beans, sunflowers, sugar cane; cucumbers, tomatoes, onions, leeks, lettuce, squashes; even more preferably the plant is selected from the group consisting of wheat, barley, oat, rye, soybean, maize, oilseed rape, cotton, sugar cane, rice and sorghum.

In a preferred embodiment of the invention, the plant to be treated is selected from the group consisting of tomato, potato, wheat, barley, oat, rye, soybean, maize, oilseed rape, canola, sunflower, cotton, sugar cane, sugar beet, rice, sorghum, pasture grass and grazed land.

In another preferred embodiment of the invention, the plant to be treated is selected from the group consisting of tomato, potato, wheat, barley, oat, rye, soybean, maize, oilseed rape, canola, sunflower, cotton, sugar cane, sugar beet, rice and sorghum.

In an especially preferred embodiment of the invention, the plants to be treated are selected from the group consisting of tomato, wheat, barley, oat, rye, maize, oilseed rape, canola, sugar cane, and rice.

In one embodiment, the plant to be treated according to the method of the invention is an agricultural plant. "Agricultural plants" are plants of which a part (e.g. seeds) or all is harvested or cultivated on a commercial scale or which serve as an important source of feed, food, fibres (e.g. cotton, linen), combustibles (e.g. wood, bioethanol, biodiesel, biomass) or other chemical compounds. Preferred agricultural plants are for example cereals, e.g. wheat, rye, barley, triticale, oats, sorghum or rice, beet, e.g. sugar beet or fodder beet; fruits, such as pomes, stone fruits or soft fruits, e.g. apples, pears, plums, peaches, almonds, cherries, strawberries, raspberries, blackberries or gooseberries; leguminous plants, such as lentils, peas, alfalfa or soybeans; oil plants, such as rapeseed, oilseed rape, canola, linseed, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as maize, soybean, rapeseed, canola, sugar cane or oil palm; tobacco; nuts; coffee; tea; bananas; vines (table grapes and grape juice grape vines); hop; turf; natural rubber plants.

Pasture grass and grassland are composed of grass or grass mixtures comprising for example Bluegrass (Poa spp.), Bentgrass (Agrostis spp.), Ryegrasses (Lolium spp.), Fescues (Festuca spp., hybrids, and cultivars), Zoysiagrass (Zoysia spp.), Bermudagrass (Cynodon spp.), St. Augustine grass, Bahiagrass (Paspalum), Centipedegrass (Eremachloa), Carpetgrass (Axonopus), Buffalograss and Grama grass. Pastures may be also composed of mixtures comprising afore mentioned grasses, for example Ryegrass, and Trifolium species, for example Trifolium pratensis and Trifolium repens, Medicago species like Medicago sativa, Lotus species like Lotus corniculatus, and Melilotus species, for example Melilotus albus.

In one embodiment, the plant to be treated according to the method of the invention is a horticultural plant. The term "horticultural plants" are to be understood as plants which are commonly used in horticulture - e.g. the cultivation of ornamentals, herbs, vegetables and/or fruits. Examples for ornamentals are turf, geranium, pelargonia, petunia, begonia and fuchsia. Examples for vegetables are potatoes, tomatoes, peppers, cucurbits, cucumbers, melons, watermelons, garlic, onions, carrots, cabbage, beans, peas and lettuce and more preferably from tomatoes, onions, peas and lettuce. Examples for fruits are apples, pears, cherries, strawberry, citrus, peaches, apricots and blueberries. In horticulture, often a substrate replaces (part of) the soil.

In one embodiment, the plant to be treated according to the method of the invention is an ornamental plant. "Ornamental plants" are plants which are commonly used in gardening, e.g. in parks, gardens and on balconies. Examples are turf, geranium, pelargonia, petunia, begonia and fuchsia.

In one embodiment, the plant to be treated according to the method of the invention is a silvicultural plant. The term "silvicultural plant" is to be understood as trees, more specifically trees used in reforestation or industrial plantations. Industrial plantations generally serve for the commercial production of forest products, such as wood, pulp, paper, rubber tree, Christmas trees, or young trees for gardening purposes. Examples for silvicultural plants are conifers, like pines, in particular Pinus spec, fir and spruce, eucalyptus, tropical trees, like teak, rubber tree, oil palm, willow (Salix), in particular Salix spec, poplar (cottonwood), in particular Populus spec, beech, in particular Fagus spec, birch, oil palm, and oak.

The following definitions apply:

The term "plants" is to be understood as plants of economic importance and/or mengrown plants. They are preferably selected from agricultural, silvicultural, ornamental and horticultural plants, each in its natural or genetically modified form. The term "plant" as used herein includes all parts of a plant, such as germinating seeds, emerging seedlings, herbaceous vegetation, as well as established woody plants, including all belowground portions (such as the roots) and aboveground portions.

The term "soil" is to be understood as a natural body comprised of living (e.g. microorganisms (such as bacteria and fungi), animals and plants) and non-living matter (e.g. minerals and organic matter (e.g. organic compounds in

varying degrees of decomposition), liquid, and gases) that occurs on the land surface, and is characterized by soil horizons that are distinguishable from the initial material as a result of various physical, chemical, biological, and anthropogenic processes.

The term "nitrification inhibitor" is to be understood as any chemical substance which slows down or retards the nitrification process which is typically occurring in (fertilized) soil. Nitrification inhibitors retard the natural transformation of ammonium into nitrate and target microorganisms and preferably ammonia-oxidizing bacteria (AOB) and/or ammonia-oxidizing archaea (AOA), by inhibiting the activity of bacteria, e.g. AOB and AOA, such as Nitrosomonas spp., Nitrosospira spp. and/or Archaea. The nitrification inhibitor is most often combined with a fertilizer, preferably an (ammonium) nitrogen-containing fertilizer, e.g. solid or liquid inorganic, organic and/or organomineral fertilizer, or manure.

The term "nitrification" is to be understood as the biological oxidation of ammonia (NH3) or ammonium (NH4+) with oxygen into nitrite (NO2-) followed by the oxidation of these nitrites into nitrates (NO3-) by microorganisms. Besides nitrate (NO3-) nitrous oxide is also produced though nitrification. Nitrification is an important step in the nitrogen cycle in soil.

The term "denitrification" is to be understood as the microbiological conversion of nitrate (NO3-) and nitrite (NO2-) to gaseous forms of nitrogen, generally N2 or N2O. This respiratory process reduces oxidized forms of nitrogen in response to the oxidation of an electron donor such as organic matter. The preferred nitrogen electron acceptors in order of most to least thermodynamically favorable include: nitrate (NO3-), nitrite (NO2-), nitric oxide (NO), and nitrous oxide (N2O). Within the general nitrogen cycle, denitrification completes the cycle by returning N2 to the atmosphere. The process is performed primarily by heterotrophic bacteria (such as Paracoccus denitrificans and various pseudomonads), although autotrophic denitrifiers have also been identified (e.g. Thiobacillus denitrificans). Denitrifiers are represented in all main phylogenetic groups. When faced with a shortage of oxygen many bacterial species are able to switch from using oxygen to using nitrates to support respiration in a process known as denitrification, during which the water-soluble nitrates are converted to gaseous products, including nitrous oxide, that are emitted into the atmosphere.

"Nitrous oxide", commonly known as happy gas or laughing gas, is a chemical compound with the chemical formula N2O. At room temperature, it is a colorless non-flammable gas. Nitrous oxide is produced naturally in soils through the microbial processes of nitrification and denitrification. These natural emissions of nitrous oxide can be increased by a variety of agricultural practices and activities including for example a) direct addition of nitrogen to soils by using mineral and organic fertilizers, b) growing of nitrogen-fixing crops, c) cultivation of high organic content soils.

The term "fertilizers" is to be understood as (chemical) compounds applied to promote plant and fruit growth. Fertilizers are typically applied either through the soil (for uptake by plant roots) or by foliar feeding (for uptake through leaves). The term "fertilizers" can be subdivided into two major categories: a) organic fertilizers (composed of decayed plant/animal matter) and b) inorganic fertilizers (composed of chemicals and minerals). Organic fertilizers include slurry, worm castings, peat, seaweed, sewage, and guano. Manufactured organic fertilizers include compost, blood meal, bone meal and seaweed extracts. Further examples are enzymatically digested proteins, fish meal, and feather meal. The decomposing crop residue from prior years and manure are another source of fertility. In addition, naturally occurring minerals, such as mine rock phosphate, sulfate of potash and limestone, are also considered as belonging to inorganic fertilizers. Inorganic fertilizers are usually manufactured through chemical processes (such as the Haber-Bosch process), also using naturally occurring deposits, while chemically altering them (e.g. concentrated triple superphosphate). Naturally occurring inorganic fertilizers include Chilean sodium nitrate, mine rock phosphate, and limestone. As a third category organomineral fertilizers can be mentioned as a combination of inorganic and organic fertilizers.

The term "fertilizer comprising urea" (urea fertilizer) is defined as synthetic fertilizers comprising urea, excluding any naturally occurring fertilizers comprising urea (for instance manure as an example for a naturally occurring fertilizer comprising urea). Examples of fertilizer comprising urea are urea ammonium nitrate (UAN), isobutylidene diurea (IBDU), crotonylidene diurea (CDU) and urea formaldehyde (UF). Urea is usually made as granulated material or prills. Urea fertilizer can be produced by dropping the liquid urea from a prill tower while drying the product. Urea can also be obtained as a liquid formulation, which may be used for foliar application, e.g. on potatoes, wheat, vegetables and soybeans as well as liquid application to the field. It is commonly mixed with ammonium nitrate to form UAN with 28% N.

The term "locus" (plant habitat) is to be understood as any type of environment, soil, area or material where the plant is growing or intended to grow. Especially preferred according to the invention is soil.

The invention is further illustrated by the following examples.

Examples

1. Pyrazolo[3,4-b]pyridines

Different pyrazolo[3,4-b]pyridines were obtained from Enamine (SIA Enamine, Vestienas iela 2 B, LV-1035 Riga, Latvia - https://enamine.net/) or MolPort (SIA MolPort, Lacplesa street 41, LV-1011 Riga, Latvia - https://www.molport.com/). The respective compounds are shown in Table 1 below.

## 2. Material and methods

### 2.1 Nitrite measurements

Nitrite (NO2-) was measured using the Griess reagent (Product number: G4410, Griess reagent (modified), Sigma-Aldrich). Equal volumes of the sample or a diluted sample and the Griess reagent were mixed a transparent flat bottom multi-well plate and incubated in the dark at room temperature for 10 minutes. Absorbance values at 540 nm were measured spectrophotometrically (EnVision, Perkin Elmer®) and used to calculate the [NO2-] by use of a standard curve.

### 2.2 Ammonium measurements

Ammonium (NH4+) was measured via a modified Berthelot's reagent protocol. 8 μl culture sample, 35 μl reagent A (0.5 g NaOH with 8 ml NaClO (2.5 %) in 92 ml MilliQ) and 33 μl reagent B (1 g salicylic acid, 0.5 g NaOH and 1.0237 g sodium nitroprusside dihydrate in 100 ml MilliQ) were consecutively added to 160 μl MilliQ in flat bottom 96-well plates (Cat. No. 353072, Falcon@ 96 Well Clear Microplate, Corning). Absorbance values at 635 nm were measured spectrophotometrically (EnVision, Perkin Elmer®) after a 30 min incubation and used to calculate [NH4+] by use of a standard curve.

### 2.3 Culture maintenance

#### 2.3.1 Nitrososphaera viennensis

A liquid culture sample of Nitrososphaera viennensis EN76T was kindly supplied by prof. dr. Christa Schleper (University of Vienna). Cells were grown in fresh water medium (FWM) as described earlier by Tourna et al. (2011). All necessary materials were rinsed with 1 % HCl and washed at least 3 times with MilliQ water. FWM (pH 7.5 (KOH)) contained 17 mM NaCl, 3 mM MgCl2 × 2 H2O, 680 μM CaCl2 × 2 H2O, 1.47 mM KH2PO4 and 6.71 mM KCl. After autoclaving, successively 1 mL non-chelated trace element mixture (101 mM HCl, 488 μM H3BO3, 508 μM MnCl2 × 4 H2O, 803 μM CoCl2 × 6 H2O, 101 μM NiCl2 × 6 H2O, 12 μM CuCl2 × 2 H2O, 503 μM ZnSO4 × 7 H2O and 150 μM Na2MoO4 × 2 H2O), 1 mL Fe-NaEDTA (7.5 mM), 1 mL vitamin solution (20 mg/L biotin, 20 mg/L folic acid, 100 mg/L pyridoxine-HCl, 50 mg/L thiamine-HCl, 50 mg/L riboflavin, 50 mg/L nicotinic acid, 50 mg/L DL-pantothenic acid, 50 mg/L P-aminobenzoic acid, 2 g/L choline chloride and 10 mg/L vitamin B12), 2 mL NaHCO3 (1 M), 2 mL kanamycin (100 mg/mL), 2 mL carbenicillin (100 mg/mL), 3 mL NH4Cl (1 M), 10 mL HEPES buffer (1 M, pH 7.6) and 1 mL Na-pyruvate (0.1 M) were added aseptically. All stock-solutions were filter-sterilized, except the autoclaved non-chelated trace element mixture. Cultures were incubated aerobically at 42 °C without shaking in sterile 250-mL Erlenmeyer flasks or 30-mL cultivation tubes (Product number: 216-1290, Quickstart universal containers STERILIN®, VWR) filled with either 100 or 20 mL FWM and sealed with tape (Micropore™ Surgical Tape 1530-1, 3M™). Late-log phase cultures ([NO2-] ≥ 1 mM) were subcultivated by dilution (1:400) in fresh FWM

#### 2.3.2ABIL

Ammonia-binding liquid inoculum (ABIL) is a nitrifying microbial enrichment containing both AOA and AOB and was obtained from Avecom nv (Belgium). The suspension was sieved through an iron mesh with diameter 0.5 mm to remove large particles, supplied with 2.5 mM (NH4)2SO4 and poured in a sterile Erlenmeyer flask. Culture flasks were sealed with tape (Micropore™ Surgical Tape 1530-1, 3M™) and incubated in the dark at 30°C, while shaking (± 160 rpm). Growth was assessed by NH4+ measurements.

### 2.4 Nitrification inhibition assays

#### 2.4.1 Nitrososphaera viennensis

7-day old 100 mL cultures grown in 250-mL Erlenmeyer flasks with a [NO2-] ≥ 1 mM were 5 times overconcentrated in fresh FWM by centrifugation (4000 rpm, 15 min, 5°C) in 50 mL centrifuge tubes (Cat. No. 430829, CentriStar™ Conical Centrifuge Tubes, Corning®). Per batch, all the cultures were pooled in one sterile Schott bottle. Subsequently, 200 μl/well was dispensed at low pipetting speed in transparent flat bottom 96-well plates (Cat. No. 353072, Falcon@ 96 Well Clear Microplate, Corning®) using 150 μl wide-bore tips (two steps of 100 μl) on a Tecan robot (Freedom EVO®, Tecan). 0.5 μl of 99.99 % DMSO (negative control - final concentration 0.25%) and 0.5 μl of 0.04 M PTIO (2-phenyl-4,4,5,5-tetramethylimidazoline-1-oxyl 3-oxide, positive control - final concentration 100 μM) were added manually to the

first and last column respectively. Finally, 0.5 μl of candidate nitrification inhibitors (1 mM stock solutions in 99.99% DMSO - final concentration 2.5 μM) were added to the central wells using a pin tool on a Tecan robot (Freedom EVO®, Tecan). In between additions, the pins were washed in sequence with 99.5% DMSO, MilliQ water and 100% ethanol and air-dried. All plates were sealed with tape (Micropore™ Surgical Tape 1530-1, 3M™), stacked per 4 on top of a 96-well plate filled with 100 μl MilliQ per well and covered with aluminum foil. Position effects of the stacks within the incubator were considered. Plates were incubated at 42°C without shaking. 24 h later, NO2- was measured spectrophotometrically at 540 nm (EnVision, Perkin Elmer®). For this, the samples were first 25 times diluted by pipetting × μl of samples into × μl fresh growth medium in intermediate plates (Cat. No. 353077, Falcon® 96-well Clear Round Bottom Microplate, Corning®) to then mix 15 μl of the diluted samples with 15 μl Griess reagent in the wells of a transparent flat bottom 384-well plate (Cat. No. X7001, Low Profile Microplate, Molecular Devices) that was measured spectrophotometrically at 540 nm (EnVision, Perkin Elmer®).

**2.4.2ABIL**

600 mL ABIL cultures grown in 1-L Erlenmeyer flasks that fully consumed 5 mM NH4+ (measured via the modified Berthelot reagent protocol) within 24 h were used for a miniaturized, high-throughput nitrification inhibition assay. First, a standard cassette with wide-enough tubes was installed in the dispenser (Multidrop™ Combi Reagent Dispenser, Thermo Scientific™) to prevent clogging of the system during dispensing. Then, the tubes were primed with 100 mL MilliQ and the ABIL culture (with sediment) was equally distributed in transparent flat bottom 96-well plates (Cat. No. 353072, Falcon® 96 Well Clear Microplate, Corning®). The culture was continuously stirred using a magnetic stirrer (speed 600 / min) for homogenous distribution. The stirrer and tubing head (continuously covered with culture liquid) were placed on opposite sides of the Erlenmeyer flask to prevent obstruction. All wells in columns 2 to 12 were filled with 135 μl ABIL.

The first column was used for an ammonium standard curve per plate: wells B1 to D1 and wells F1 to H1 each got 135 μl MilliQ followed by 15 μl of either 5 mM, 12.5 mM or 25 mM (NH4)2SO4. Wells A1 and E1 got 150 μl MilliQ. The wells in column 12 alternately got 1.5 μl of 10 mM PTIO (2-Phenyl-4,4,5,5-tetramethylimidazoline-3-oxide-1-oxyl, positive control - final concentration 100 μM) or 1.5 μl of 99.99% DMSO (compound solvent and negative control - final concentration 1%). The different controls were added with a JANUS Mini VariSpan 4-tip, Perkin Elmer®. After adding all controls, the MDT (Janus Mini MDT, Perkin Elmer®) added 1.5 μl compounds (final concentration 10 μM) from library plates to all central wells. Finally, the dispenser (Multidrop™ Combi Reagent Dispenser, Thermo Scientific™) added 15 μl of a 25 mM (NH4)2SO4 solution (N-source - final concentration 5 mM) to columns 2 to 12.

The assay plates were sealed with tape (Micropore™ Surgical Tape 1530-1, 3M™), stacked per 4 and packed in aluminum foil before incubation in the dark at 28°C, while thoroughly shaking (± 210 rpm). 24 h later, an 8 μl culture sample was taken from each well in the assay plates and diluted in 160 μl MilliQ water in read-out transparent flat bottom 96-well plates (Cat. No. 353072, Falcon® 96 Well Clear Microplate, Corning). Subsequently, 35 μl reagent A and 33 μl reagent B were added to the wells consecutively. Finally, the read-out plates were incubated for 30 min at room temperature and measured spectrophotometrically at 635 nm (EnVision, Perkin Elmer®).

**2.4.3 Quantification nitrification inhibition**

To assess the efficacy of the compounds (in terms of nitrification inhibition) and to enable comparison between plates and batches of cultures, we calculated the relative nitrification. More in detail, all nitrite results were normalized towards both a negative control, containing no compound, and a positive control, containing 100 μM PTIO, using Equation 1. This normalization was done per multi-well plate and each plate contained 8 positive and 8 negative controls.

$$Relative\ nitrification = \frac{Nitrite(compound) - Nitrite(positive\ control)}{Nitrite(negative\ control) - Nitrite(positive\ control)} \quad \text{(Equation 1)}$$

As a result, compounds that allowed full nitrification (no nitrification inhibition) show a relative nitrification of 1 (or 100%). A compound that shows the same nitrification inhibition as the positive control shows a nitrification inhibition of 0.

For the nitrifying community ABIL, a relative nitrification was calculated by comparing the consumed ammonium (Equation 2), using 100 μM PTIO as the positive control.

$$Relative\ nitrification = \frac{Ammonium(positive\ control) - Ammonium(compound)}{Ammonium(positive\ control) - Ammonium(negative\ control)} \quad \text{(Equation 2)}$$

## 2.5 In soil assays

Soil samples were collected from different fields in Belgium or Germany. Vegetation was removed and samples were taken from different plots. All soil samples were mixed and sieved (mesh size 2.8 mm) to filter large debris and homogenize soil.

Soil water content was determined by drying soil for ≥ 48 h in a 60°C oven and measuring weight before and after drying. Based on the soil water content, compound solutions were prepared so that addition of nitrification inhibitor and NH4Cl solution result in a final compound concentration of 50 μM (unless otherwise stated) and a final NH4+ concentration of 10 mM. Soil was treated first with the respective nitrification inhibitor solution and then with the NH4Cl solution. Extracts with 1M KCl were used to measure NH4+ concentrations. The nitrification percentage was calculated as the ratio of the consumed ammonium in treated soil versus the consumed ammonium in non-treated soil; the nitrification inhibition percentage was calculated as '100% - the nitrification percentage'.

## 3. Results

The results shown in Table 1 below are based on the use of the nitrifying archaeon N. viennensis and the nitrifying community ABIL (ammonia-binding liquid inoculum - Avecom nv, Belgium). Table 1 shows that all tested substances clearly inhibit nitrification in at least one of the tested systems.

**Table 1: Examples of structures with a pyrazolo[3,4-b]pyridine backbone that inhibit nitrification in nitrifying archaea.**

| Nitrification is expressed relative to the no-inhibitor control, where the nitrification is 100%. | | | | |
|---|---|---|---|---|
| Example | Structure | ID | ABIL - relative nitrification (%) 10 micromolar | N. viennensis - relative nitrification (%) 2.5 micromolar |
| 1 | 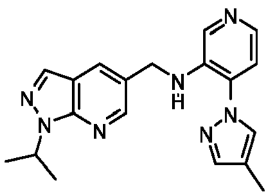 | Z1601242688 | 9 | 33 |
| 2 | 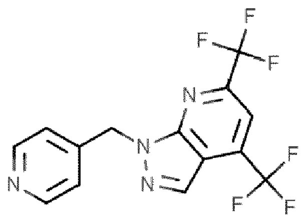 | Z90278803 | 15 | |
| 3 | 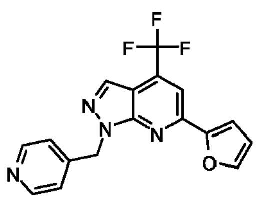 | Z98638976 | 36 | 76 |
| 4 | 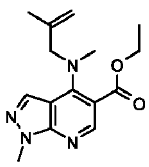 | Z1697078538 | 36 | |

(continued)

| Nitrification is expressed relative to the no-inhibitor control, where the nitrification is 100%. | | | | |
|---|---|---|---|---|
| Example | Structure | ID | ABIL - relative nitrification (%) 10 micromolar | N. viennensis - relative nitrification (%) 2.5 micromolar |
| 5 | 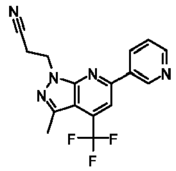 | Z55426831 | 40 | 75 |
| 6 | 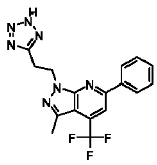 | Z56944137 | 45 | |

Table 2 shows pyrazolo[3,4-b]pyridines that were, in different experiments, tested for their nitrification inhibition in soil. Table 2 shows one example that results in a strong nitrification inhibition in 4 different soils. The level of nitrification inhibition of example 7 is high, in one case even higher than the commonly applied nitrification inhibitor DMP. More importantly, in all cases, the combination of DMP with example 7 result in a stronger nitrification inhibition than single application of the substances. This confirms that the new substance (example 7) targets a group of micro-organisms that is not targeted by DMP.

**Table 2: Examples of structures with a pyrazolo[3,4-b]pyridine backbone that inhibit nitrification in soil.**

| | | **Nitrification inhibition % 14 or 21 days after ammonium supplementation and treatment with the different examples** | | | |
|---|---|---|---|---|---|
| **Example** | | **Soil 1 (14 d)** | **Soil 2 (14 d)** | **Soil 3 (21 d)** | **Soil 4 (21 d)** |
| C1 | DMP | 74 | 83 | 46 | 46 |
| 7 | 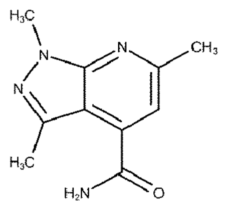 | 63 | 51 | 34 | 53 |
| 7 + C1 | 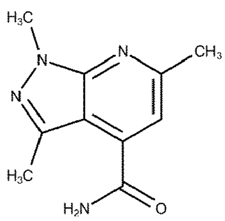 + DMP | 79 | 88 | 81 | 63 |

## Claims

**1.** A pyrazolo[3,4-b]pyridine compounds of the formula (A)

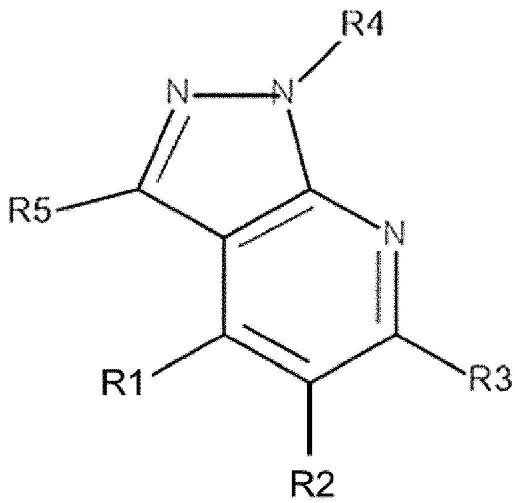

(A)

with the following definitions:

R1 hydrogen, methyl, carboxylic acid, carboxamide, methoxycarboxamide or methylcarboxamide,
R2 hydrogen, methyl, carboxylic acid, carboxamide, methoxycarboxamide or methylcarboxamide,
with at least R1 or R2 being hydrogen or methyl,
R3 hydrogen or a C1-C4 hydrocarbon residue which can contain one or two heteroatoms selected from the group consisting of fluor, nitrogen, oxygen and sulfur and preferably is hydrogen, methyl, ethyl or iso-propyl,
R4 hydrogen or a C1-C4 hydrocarbon residue which can contain one or two heteroatoms selected from the group consisting of fluor, nitrogen, oxygen and sulfur and preferably is hydrogen, methyl, ethyl, or iso-propyl, and
R5 hydrogen or a C1-C4 hydrocarbon residue which can contain one or two heteroatoms selected from the group consisting of fluor, nitrogen, oxygen and sulfur and preferably is hydrogen, methyl, ethyl or iso-propyl.

as nitrification inhibitor, preferably acting on an inhibiting AOA and/or comammox.

**2.** The use of any one of the pyrazolo[3,4-b]pyridine according to claim 1, wherein the compound of the formula (A) is a compound selected from the group consisting of the compounds of the formulae (I), (II), (III), (IV), (V), (VI), (VII), (VIII), (IX), (X), (XI), (XII), (XIII), (XIV), (XV), (XVI), (XVII), (XVIII), (XVIV), and (XX):

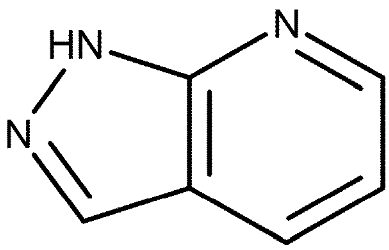

(I)

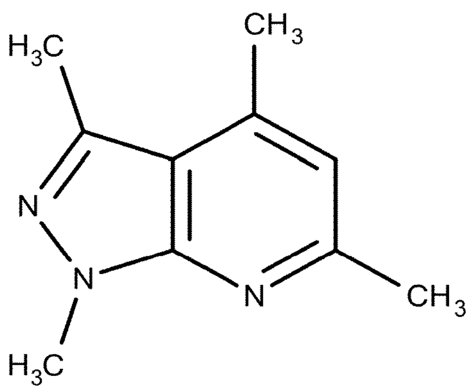

(II)

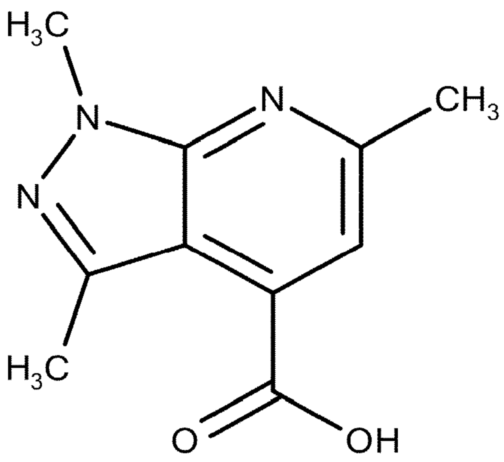

(III)

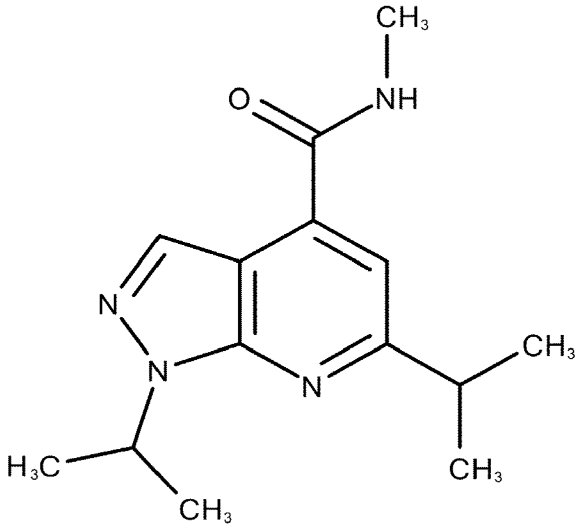

(IV)

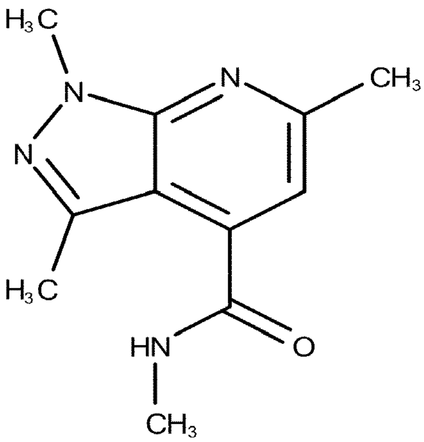

(V)

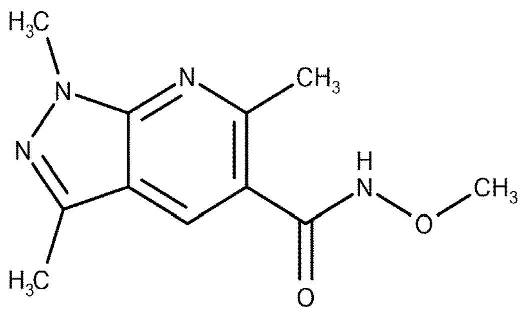

(VI)

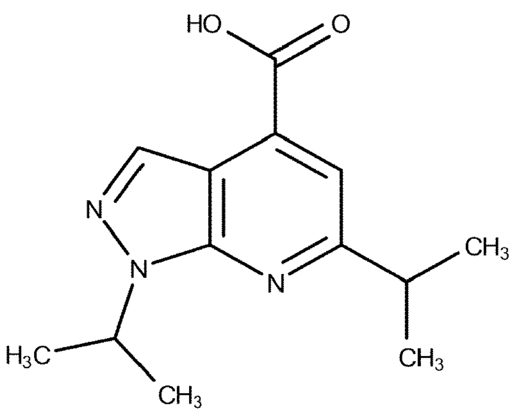

(VII)

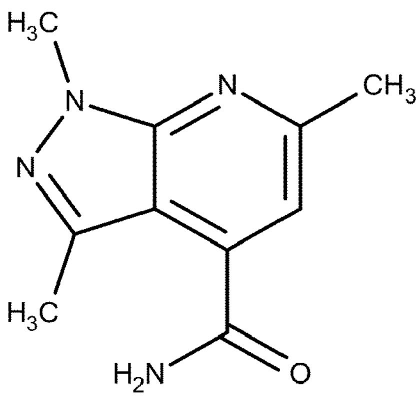

(VIII)

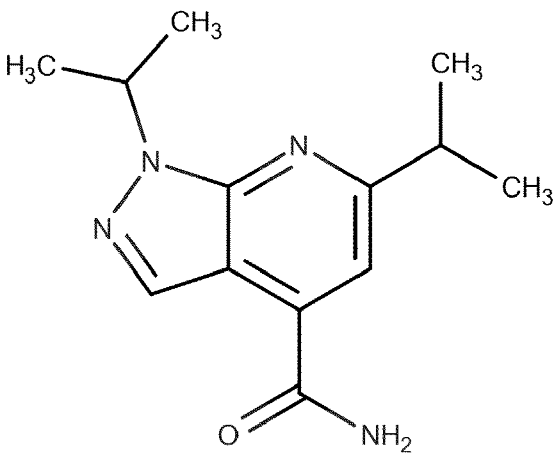

(IX)

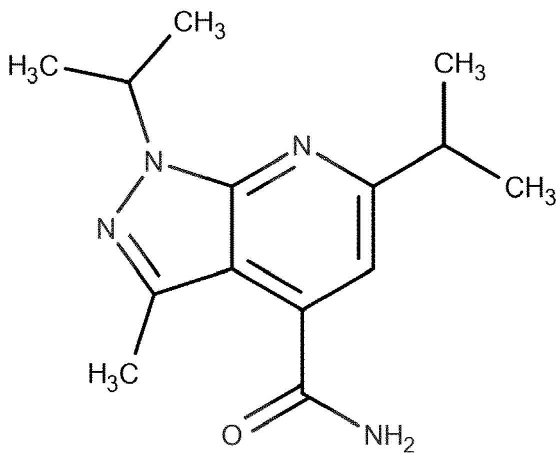

(X)

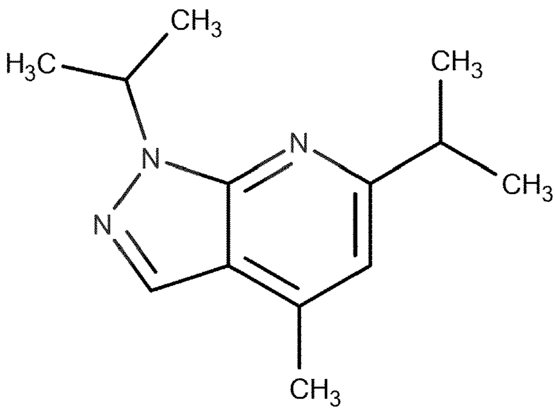

(XI)

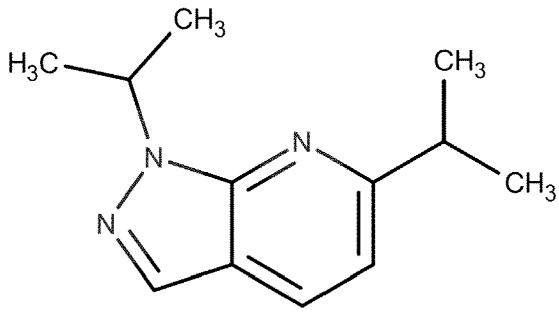

(XII)

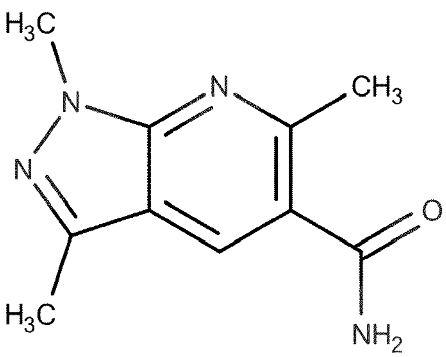

(XIII)

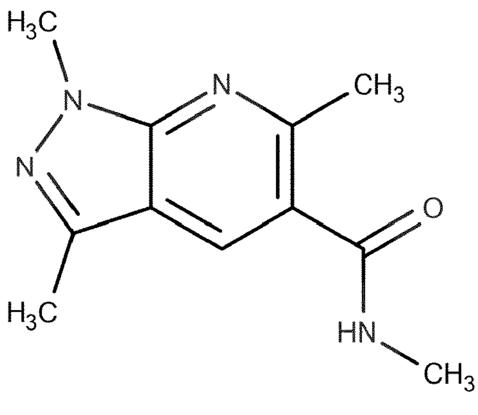

(XIV)

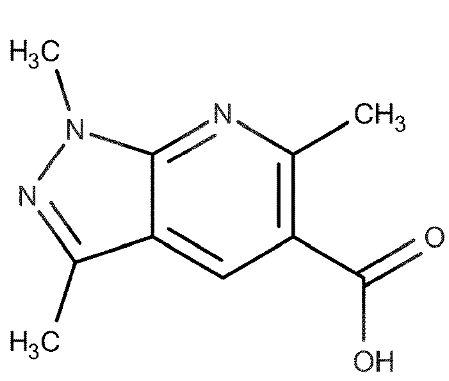

(XV)

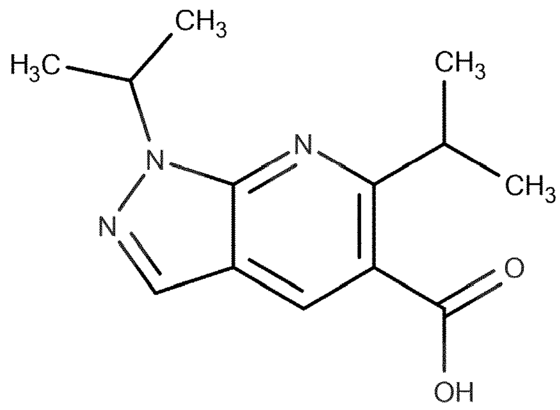

(XVI)

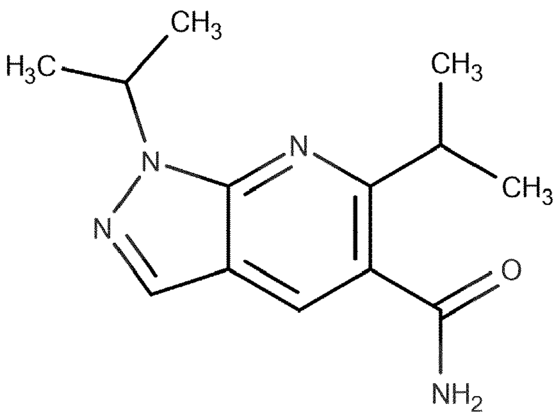

(XVII)

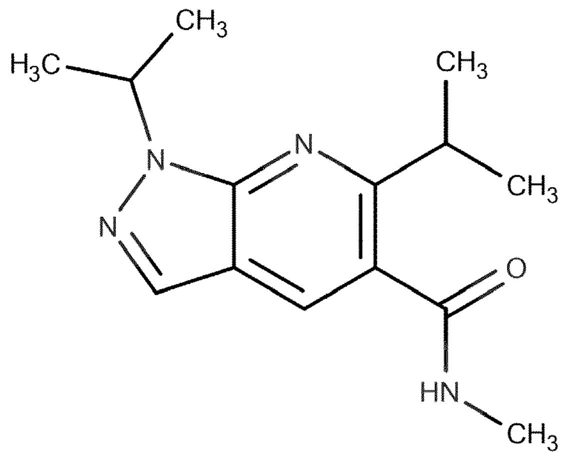

(XVIII)

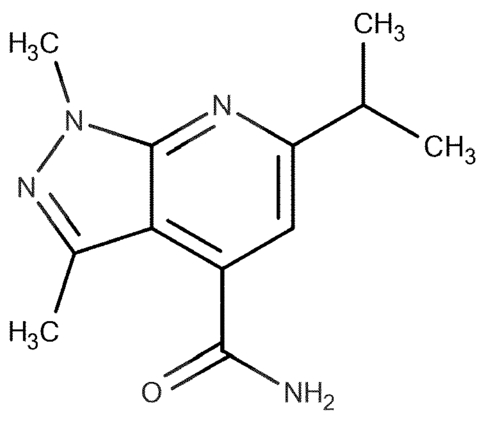

(XVIV)

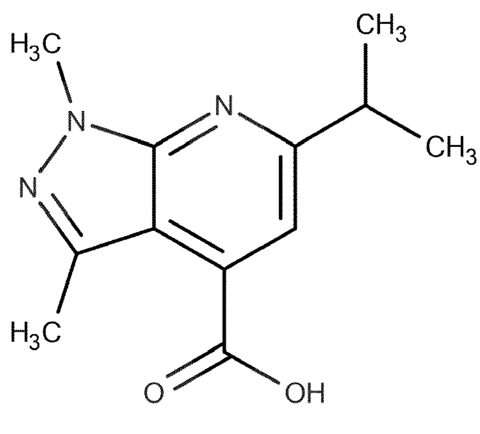

(XX)

3. The use of any one of the preceding claims, wherein the pyrazolo[3,4-b]pyridine compound inhibits microorganisms selected from the group consisting of ammonia oxidizing archaea (AOA), ammonia-oxidizing bacteria (AOB), or combinations thereof.

4. The use of any one of the preceding claims, wherein the pyrazolo[3,4-b]pyridine compound is a pyrazolo[3,4-b]pyridine compound of the formula (I) and wherein the pyrazolo[3,4-b]pyridine-4-carboxamide of the formula (I) inhibits ammonia oxidizing archaea (AOA) and ammonia-oxidizing bacteria (AOB).

**5.** The use of any one of the proceedings claims, wherein the pyrazolo[3,4-b]pyridine compound of the formula (II) to (VIII) is inhibiting ammonia oxidizing archaea (AOA).

**6.** The use of a pyrazolo[3,4-b]pyridine compound according to any one of the preceding claims, wherein the pyrazolo[3,4-b]pyridine compound is administered in combination or in admixture with a compound selected from the group consisting of 2-(3,4-dimethyl-pyrazol-1-yl)-succinic acid (DMPSA), 3,4-dimethylpyrazole (DMP), 3,4-dimethylpyrazolephosphate (DMPP).

**7.** The use of a pyrazolo[3,4-b]pyridine compound according to any one of the preceding claims as an additive or coating material for inorganic and/or organic and/or organomineral fertilizers, preferably inorganic fertilizers, more preferably ammonium- and/or urea-containing nitrogen fertilizers.

**8.** The use as of any one of the preceding claims, wherein the pyrazolo[3,4-b]pyridine-4 compound is administered in the form of a formulation, solution or dispersion, separately or simultaneously with a fertilizer, or is incorporated into the fertilizer or is applied to the fertilizer.

**9.** The use of a pyrazolo[3,4-b]pyridine compound according to any one of the preceding claims for reducing the nitrogen or carbon losses in inorganic and/or organic and/or organomineral fertilizers or nitrogen- or carbon-containing compounds or materials and also on harvest refuse and on grazed land or during the storage of liquid manure and for lowering the ammonia load in animal stalls.

**10.** A fertilizer mixture, containing

A. an inorganic and/or organic and/or organomineral fertilizer and
B. 10 to 10000 weight-ppm, based on the fertilizer, of a pyrazolo[3,4-b]pyridine according to any one of the preceding claims.

**11.** A method of fertilizing soils exploited agriculturally or horticulturally, wherein a fertilizer mixture containing compounds A and B

A. an inorganic and/or organic and/or organomineral fertilizer and
B. 10 to 10000 weight-ppm, based on the inorganic fertilizer, of a pyrazolo[3,4-b]pyridine as defined in one claims 1 to 5,

or
compounds A and B separately, but within a period of 0 to 5 hours, preferably 0 to 1 hour, more preferably approximately at the same time, is applied to the soils.

Europäisches Patentamt
European Patent Office
Office européen des brevets

# EUROPEAN SEARCH REPORT

Application Number
EP 22 16 1222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 556 844 B2 (BASF SE [DE]) 11 February 2020 (2020-02-11) * claim 1; example 1; table 1.1 * * column 78, line 20 - column 79, line 30 * | 3-9,11 | INV. C05G3/90 |
| A | DE 16 70 578 A1 (AKAD WISSENSCHAFTEN DDR) 16 June 1971 (1971-06-16) * claim 1; example 1 * | 1-11 | |
| X | WO 2018/013867 A1 (MARINEAU JASON J [US]; ZAHLER ROBERT [US] ET AL.) 18 January 2018 (2018-01-18) * example 74 * * paragraphs [0504] - [0505] * | 1,2 | |
| X | US 2015/232459 A1 (IIJIMA TORU [JP] ET AL) 20 August 2015 (2015-08-20) * example 104 * * paragraphs [0402] - [0403] * | 1 | |

TECHNICAL FIELDS SEARCHED (IPC)
C05G

The present search report has been drawn up for all claims

1

| Place of search | Date of completion of the search | Examiner |
|---|---|---|
| The Hague | 28 July 2022 | Agra-Gutierrez, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 22 16 1222

This annex lists the patent family members relating to the patent documents cited in the above-mentioned European search report. The members are as contained in the European Patent Office EDP file on
The European Patent Office is in no way liable for these particulars which are merely given for the purpose of information.

28-07-2022

| Patent document cited in search report | Publication date | Patent family member(s) | Publication date |
|---|---|---|---|
| US 10556844 B2 | 11-02-2020 | AU 2016214305 A1 | 24-08-2017 |
| | | CN 107207443 A | 26-09-2017 |
| | | EP 3253209 A1 | 13-12-2017 |
| | | JP 6743032 B2 | 19-08-2020 |
| | | JP 2018508452 A | 29-03-2018 |
| | | US 2018016199 A1 | 18-01-2018 |
| | | WO 2016124769 A1 | 11-08-2016 |
| DE 1670578 A1 | 16-06-1971 | NONE | |
| WO 2018013867 A1 | 18-01-2018 | AU 2017295863 A1 | 07-02-2019 |
| | | BR 112019000716 A2 | 07-05-2019 |
| | | CA 3030795 A1 | 18-01-2018 |
| | | CN 110036004 A | 19-07-2019 |
| | | EP 3484871 A1 | 22-05-2019 |
| | | IL 264222 A | 28-02-2019 |
| | | IL 292422 A | 01-06-2022 |
| | | JP 7058636 B2 | 22-04-2022 |
| | | JP 2019527217 A | 26-09-2019 |
| | | JP 2022020860 A | 01-02-2022 |
| | | KR 20190038841 A | 09-04-2019 |
| | | RU 2019103870 A | 14-08-2020 |
| | | SG 10202012466P A | 28-01-2021 |
| | | SG 11201900328W A | 27-02-2019 |
| | | WO 2018013867 A1 | 18-01-2018 |
| US 2015232459 A1 | 20-08-2015 | CN 104640847 A | 20-05-2015 |
| | | EP 2933248 A1 | 21-10-2015 |
| | | ES 2662026 T3 | 05-04-2018 |
| | | JP 6158193 B2 | 05-07-2017 |
| | | JP WO2014042263 A1 | 18-08-2016 |
| | | TW 201418233 A | 16-05-2014 |
| | | US 2015232459 A1 | 20-08-2015 |
| | | WO 2014042263 A1 | 20-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1120388 B
- WO 9624566 A
- WO 2011032904 A
- WO 2013121384 A
- US 20180016199 A1
- US 20200062755 A1
- WO 2010100475 A1
- EP 2021075026 W
- WO 2016207210 A
- DE 4128828 A
- DE 10230593 C
- EP 1820788 A
- US 6139596 A
- WO 2015086823 A


### Non-patent literature cited in the description


- **J. ZHAO et al.** *Soil Biology and Biochemistry,* 2020, vol. 141, 107673